# EUROPEAN PATENT APPLICATION

(11) **EP 2 631 772 A2**
(43) Date of publication of application: **28.08.2013**
(21) Application number: 13000102.7
(22) Date of filing: 09.01.2013
(51) Int. Cl.: G06F 3/0488, G06F 3/0485, G06F 3/0481, G06F 3/0483

(54) **Mobile terminal and control method for the mobile terminal**

(30) Priority: 24.02.2012 KR 20120019317; 24.02.2012 KR 20120019319
(71) Applicant: LG Electronics, Inc., Seoul, 150-721 (KR)
(72) Inventor: Hwang, Insu, Seoul (KR); Lee, Seungeun, Seoul (KR); Mo, Hyunho, Gyeonggi-Do (KR); Lee, Kunho, Seoul (KR); Oh, Jinsuk, Gyeonggi-Do (KR); Bae, Kwonhan, Seoul (KR); Lee, Sunmi, Seoul (KR)
(74) Representative: Urner, Peter

(57) **Abstract**

The present disclosure relates to a mobile terminal capable of a touch input and a control method thereof. A mobile terminal according to an embodiment of the present disclosure may include (151) a display unit configured to output a first base region containing at least one object, a sensing unit (140) configured to sense a touch gesture for displaying a second base region different from the first base region on the display unit (151), and a controller (180) configured to control the display unit to display the second base region on the display unit in response to the touch gesture, and transform at least one shape of an object contained in the first base region and the first base region when the first base region is switched to the second base region.

## Description

### BACKGROUND OF THE INVENTION

### 1. Field of the invention

The present disclosure relates to a mobile terminal capable of a touch input and a control method thereof.

### 2. Description of the related art

Terminals can be classified into a mobile terminal and a stationary terminal based on its mobility. Furthermore, the mobile terminal can be further classified into a handheld terminal and a vehicle mount terminal based on whether or not it can be directly carried by a user.

As it becomes multifunctional, the terminal can be allowed to capture still images or moving images, play music or video files, play games, receive broadcast and the like, so as to be implemented as an integrated multimedia player. Moreover, the improvement of the terminal may be taken into consideration in the aspect of structure or software to support and enhance the function of the terminal.

Furthermore, an icon or widget associated with an application may be displayed on a touch screen of the mobile terminal, and the displayed icon or widget may be moved by a touch gesture, or controlled to display a different icon or widget from the currently displayed one.

### SUMMARY OF THE INVENTION

An object of the present disclosure is to provide a mobile terminal and a control method thereof capable of moving objects displayed on the display unit while providing visual amusement to a user.

In order to accomplish the foregoing objective, a mobile terminal according to an embodiment of the present disclosure may include a display unit configured to output a first base region containing at least one object, a sensing unit configured to sense a touch gesture for displaying a second base region different from the first base region on the display unit, and a controller configured to control the display unit to display the second base region on the display unit in response to the touch gesture, and transform at least one shape of an object contained in the first base region and the first base region when the first base region is switched to the second base region.

According to an embodiment, the mobile terminal may be characterized in that the first base region is moved in a direction corresponding to the touch gesture based on the touch gesture, and the controller controls the display unit to display at least part of the first base region in a transparent manner when the first base region is moved as much as a distance corresponding to a reference length.

According to an embodiment, the mobile terminal may be characterized in that the controller controls the display unit such that a transparency of the first base region is changed according to the extent that the first base region is moved.

According to an embodiment, the mobile terminal may be characterized in that the first base region is moved while being transformed into a state that the length of a first edge adjacent to the second base region among edges of the first base region is larger than that of a second edge facing the first edge, and the second base region is displayed on the display unit in a state that the length of a third edge adjacent to the first edge among edges of the second base region is transformed into a length greater than that of a fourth edge facing the third edge in interlock with the movement of the first base region.

According to an embodiment, the mobile terminal may be characterized in that the size of the first and the second base region is subject to a range displayed on the display unit, and the size of the region is increased as increasing the range displayed on the display unit.

According to an embodiment, the mobile terminal may be characterized in that the size of the first and the second base region are the same when a range in which the first and the second base region are displayed on the display unit is the same.

According to an embodiment, the mobile terminal may be characterized in that the shape of an object contained in the first base region is transformed dependent on the variation of a length of the first and the second edge, and the object is an icon or widget corresponding to an application.

According to an embodiment, the mobile terminal may be characterized in that the first base region is moved while the size of the first base region is gradually decreased around a first reference axis on the first base region, and the length of edges of the first base region in parallel to the first reference axis is gradually decreased according to the movement of the first base region.

According to an embodiment, the mobile terminal may be characterized in that the second base region is displayed on the display unit while the size of the second base region is gradually increased around a second reference axis on the second base region based on the movement of the first base region, and the length of edges of the second base region in parallel to the second reference axis on the second base region is increased as increasing a range in which the second base region is displayed on the display unit.

According to an embodiment, the mobile terminal may be characterized in that the transparency of an object contained in the first base region is varied around the first reference axis based on a change of the size of the first base region.

According to an embodiment, the mobile terminal may be characterized in that the first and the second base region are inclined while making a preset angle on the basis of edges adjacent between the first and the second base region based on the touch gesture.

According to an embodiment, the mobile terminal may be characterized in that the length of an edge adjacent to the second base region among edges of the first base region is shorter than that of an edge facing an edge adjacent to the second base region, and the length of an edge adjacent to the first base region among edges of the second base region is shorter than that of an edge facing an edge adjacent to the first base region.

According to an embodiment, the mobile terminal may be characterized in that the inclination of the second base region is reduced as increasing a range of the second base region displayed on the display unit.

According to an embodiment, the mobile terminal may be characterized in that the controller transforms the shape of objects contained in the first and the second base region to correspond to the inclination of the first and the second base region.

According to an embodiment, the mobile terminal may be characterized in that the controller rotationally moves the first base region using a first edge of the first base region as a reference axis, and a difference between the length of the first edge and the length of the second edge facing the first edge among edges of the first base region is increased according to the extent that the first base region is rotated.

According to an embodiment, the mobile terminal may be characterized in that the second base region is overlapped with the first base region, and gradually increased while being rotated around the reference axis according to the extent that the first base region is rotated.

According to an embodiment, the mobile terminal may be characterized in that the first base region is disappeared on the display unit when the extent that the first base region is rotated around the reference axis is equal to or greater than a reference angle, and the length of a third edge located at a position corresponding to the second edge among edges of the second base region is gradually increased according to the extent that the first base region is rotated in the second base region, and the length of the third edge is shorter than that of the second edge.

According to an embodiment, the mobile terminal may be characterized in that the first base region is gradually disappeared while being moved in a direction corresponding to the touch gesture in the state of being enlarged to a preset size, and the second base region is displayed on the display unit while being gradually enlarged from the state of being reduced to a preset size in interlock with the movement of the first base region.

According to an embodiment, the mobile terminal may be characterized in that the controller enlarges the second base region such that the size of the second base region corresponds to the size of the display unit until a time point when the movement of the first base region is completed.

According to an embodiment, the mobile terminal may be characterized in that when a control command for switching the second base region to the first base region on the display unit is applied, the controller gradually reduces the second base region to the preset size, and displays the first base region on the display unit while moving the first base region in a direction corresponding to the control command.

According to an embodiment, the mobile terminal may be characterized in that the first base region is overlapped with a background screen previously displayed on the display unit, and the first base region has a transparency such that the background screen can be identified, and objects contained in the first base region are non-transparent.

A mobile terminal according to an embodiment of the present disclosure may include a display unit configured to output a first base region containing a plurality of groups, a sensing unit configured to sense a touch gesture for displaying a second base region different from the first base region on the display unit, and a controller configured to control the display unit to display the second base region on the display unit in response to the touch gesture, and sequentially move a plurality of groups contained in the first base region when the first base region is switched to the second base region.

According to an embodiment, the mobile terminal may be characterized in that the movement sequence of a plurality of groups contained in the first base region is determined on the basis of a position to which the touch gesture is applied.

According to an embodiment, the mobile terminal may be characterized in that the sensing unit senses the touch gesture on the display unit, and the controller determines the movement sequence on the basis of a group displayed at a position corresponding to the start position of the touch gesture among the plurality of groups.

According to an embodiment, the mobile terminal may be characterized in that the controller moves a first group displayed at a position corresponding to the start position of the touch gesture among a plurality of groups contained in the first base region as the first priority, and moves at least one group adjacent to the first group as the second priority.

According to an embodiment, the mobile terminal may be characterized in that the second base region contains a plurality of group, and a plurality of groups contained in the second base region are sequentially displayed on the display unit dependent on the movement of groups contained in the first base region.

According to an embodiment, the mobile terminal may be characterized in that when any one of a plurality of groups contained in the first base region is moved, at least part of a group located at a position corresponding to the any one of groups contained in the second base region is displayed on the display unit.

According to an embodiment, the mobile terminal may be characterized in that a plurality of groups contained in the first base region are a plurality of rows for dividing the first base region into a preset number of intervals.

According to an embodiment, the mobile terminal may be characterized in that at least one object is contained in at least one of the plurality of rows, and the object is at least part of an icon or widget corresponding to an application.

According to an embodiment, the mobile terminal may be characterized in that the plurality of groups are moved with an inclination corresponding to a preset angle on the basis of a virtual reference axis located at a position corresponding to any one side of the base region.

According to an embodiment, the mobile terminal may be characterized in that the inclination is changed according to the extent that the plurality of groups are moved.

According to an embodiment, the mobile terminal may be characterized in that the second base region contains a plurality of groups, and the plurality of groups contained in the second base region are sequentially displayed on the display unit with an inclination corresponding to a preset angle dependent on the movement of groups contained in the first base region.

According to an embodiment, the mobile terminal may be characterized in that the inclination corresponding to groups contained in the second base region is changed according to the extent that groups contained in the second base region are displayed on the display unit.

According to an embodiment, the mobile terminal may be characterized in that an object contained in a group adjacent to the virtual reference axis among the plurality of groups is displayed in a more transparent manner than an object contained in the other group.

According to an embodiment, the mobile terminal may be characterized in that the controller sets a first object located at the start position of the touch gesture among a plurality of objects contained in the first base region and at least one object located prior to the first object on the basis of the movement direction of the touch gesture to a first group.

According to an embodiment, the mobile terminal may be characterized in that the first base region is divided into a plurality of rows, and the at least one object contained in the first group is an object located at a row corresponding to a row in which the first object is located.

According to an embodiment, the mobile terminal may be characterized in that the second group is formed of at least one of objects contained in the first base region, and an object contained in the second group is an object disposed most adjacent to a border of the position corresponding to the movement direction of the touch gesture among borders of the display unit.

According to an embodiment, the mobile terminal may be characterized in that the controller moves the first group more preferentially than the second group in response to the touch gesture.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal according to an embodiment of the present disclosure;
FIGS. 2A and 2B are front perspective views illustrating an example of a mobile terminal according to an embodiment of the present disclosure;
FIGS. 3A, 3B and 3C are conceptual views illustrating a method of switching a page displayed on the display unit to another page in a mobile terminal according to an embodiment of the present disclosure;
FIG. 4 is a flow chart for explaining a method of switching a base region in a mobile terminal according to an embodiment of the present disclosure;
FIGS. 5A, 5B, 5C and 5D are conceptual views for explaining a method of switching a base region in a mobile terminal according to a first embodiment of the present disclosure;
FIGS. 6A, 6B, 6C and 6D are conceptual views for explaining a method of switching a base region in a mobile terminal according to a second embodiment of the present disclosure;
FIGS. 7A, 7B, 7C and 7D are conceptual views for explaining a method of switching a base region in a mobile terminal according to a third embodiment of the present disclosure;
FIGS. 8A, 8B, 8C, 8D and 8E are conceptual views for explaining a method of switching a base region in a mobile terminal according to a fourth embodiment of the present disclosure;
FIGS. 9A, 9B, 9C, 9D, 9E and 9F are conceptual views for explaining a method of switching a base region in a mobile terminal according to a fifth embodiment of the present disclosure;
FIGS. 10A and 10B are conceptual views for explaining a method of switching a base region in a mobile terminal according to a sixth embodiment of the present disclosure;
FIGS. 11A and 11B are conceptual views for explaining a method of disposing an object in a mobile terminal according to an embodiment of the present disclosure;
FIG. 12 is a flow chart for explaining a method of sequentially moving objects contained in a base region in a mobile terminal according to an embodiment of the present disclosure;
FIGS. 13A, 13B, 13C, 13D, 13E and 13F are conceptual views for explaining a method of moving objects contained in a first base region for each group in a mobile terminal according to an embodiment of the present disclosure;
FIGS. 14A and 14B are conceptual views for explaining a method of moving a second base region being moved dependent on the movement of the first base region in a mobile terminal according to an embodiment of the present disclosure;
FIGS. 15A, 15B, 15C and 15D are conceptual views for explaining a method of moving objects contained in a first base region with an inclination for each group in a mobile terminal according to an embodiment of the present disclosure;
FIGS. 16A, 16B, 16C, 16D and 16E are conceptual views for explaining a method of moving objects contained in a first base region based on a row in a mobile terminal according to an embodiment of the present disclosure; and
FIGS. 17A, 17B, 17C, 17D and 17E are conceptual views for explaining a method of moving objects contained in a first base region with an inclination based on a row in a mobile terminal according to an embodiment of the present disclosure.

### DETAILED DESCRIPTION OF THE INVENTION

Hereinafter, the embodiments disclosed herein will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. In describing the embodiments disclosed herein, moreover, the detailed description will be omitted when a specific description for publicly known technologies to which the invention pertains is judged to obscure the gist of the present invention. Also, it should be noted that the accompanying drawings are merely illustrated to easily explain the spirit of the invention, and therefore, they should not be construed to limit the technological spirit disclosed herein by the accompanying drawings.

A mobile terminal disclosed herein may include a portable phone, a smart phone, a laptop computer, a digital broadcast terminal, a personal digital assistant (PDA), a portable multimedia player (PMP), a navigation, a slate PC, a tablet PC, an ultra book and the like. However, it would be easily understood by those skilled in the art that a configuration according to the following description may be applicable to a stationary terminal such as a digital TV, a desktop computer, and the like, excluding constituent elements particularly configured for mobile purposes.

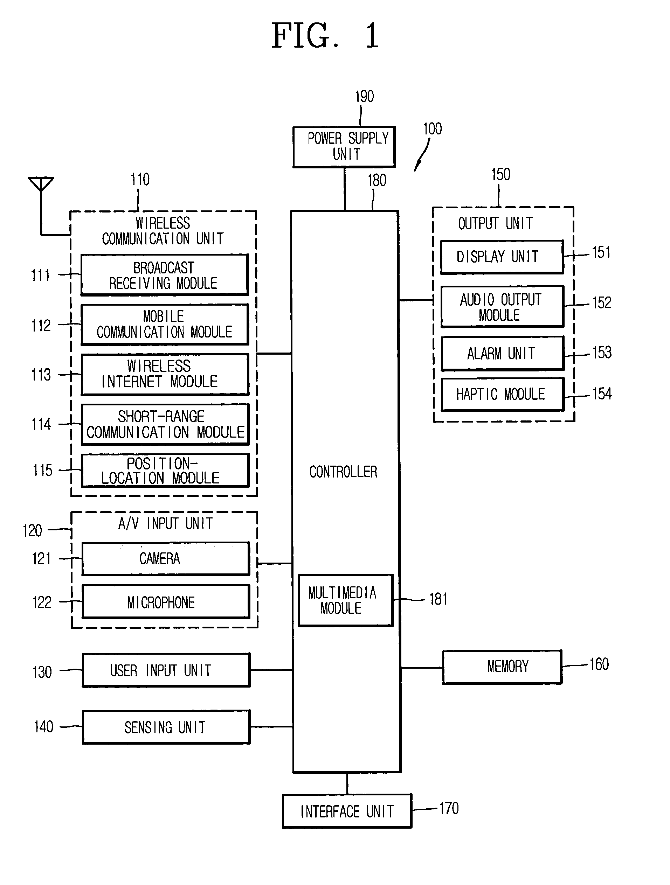

FIG. 1 is a block diagram illustrating a mobile terminal according to an embodiment disclosed herein.

The mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile terminal may be implemented with greater or less number of elements than those illustrated elements.

Hereinafter, the constituent elements will be described in sequence.

The wireless communication unit 110 typically includes one or more elements allowing radio communication between the mobile terminal 100 and a wireless communication system, or allowing radio communication between radio communication the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel.

The broadcast channel may include a satellite channel and/or a terrestrial channel. The broadcast management server may mean a server that generates and transmits a broadcast signal and/or broadcast associated information or a server that receives a previously generated broadcast signal and/or broadcast associated information and transmits to the mobile terminal 100. The broadcast signal may include a TV broadcast signal, a radio broadcast signal and a data broadcast signal as well as a broadcast signal in a form that a data broadcast signal is coupled to the TV or radio broadcast signal.

The broadcast associated information may mean information regarding a broadcast channel, a broadcast program, a broadcast service provider, and the like. The broadcast associated information may also be provided through a mobile communication network, and in this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may receive a broadcast signal using various types of broadcast systems. In particular, the broadcast receiving module 111 may receive a digital broadcast signal using a digital broadcast system such as digital multimedia broadcasting-terrestrial (DMB-T), digital multimedia broadcasting-satellite (DMB-S), media forward link only (MediaFLO), digital video broadcast-handheld (DVB-H), integrated services digital broadcast-terrestrial (ISDB-T), and the like. The broadcast receiving module 111 is, of course, configured to be suitable for every broadcast system that provides a broadcast signal as well as the above-mentioned digital broadcast systems.

The broadcast signal and/or broadcast-associated information received through the broadcast receiving module 111 may be stored in the memory 160.

The mobile communication module 112 transmits and/or receives a radio signal to and/or from at least one of a base station, an external terminal and a server over a mobile communication network. Here, the radio signal may include a voice call signal, a video call signal and/or various types of data according to text and/or multimedia message transmission and/or reception.

The mobile communication module 112 may be configured to implement an video communication mode and a voice communication mode. The video communication mode refers to a configuration in which communication is made while viewing an image of the counterpart, and the voice communication mode refers to a configuration in which communication is made without viewing an image of the counterpart. The mobile communication module 112 may be configured to transmit or receive at least one of voice or image data to implement the video communication mode and voice communication mode.

The wireless Internet module 113 means a module for supporting wireless Internet access. The wireless Internet module 113 may be built-in or externally installed to the mobile terminal 100. Here, it may be used a wireless Internet access technique including a WLAN (Wireless LAN), Wi-Fi, Wibro (Wireless Broadband), Wimax (World Interoperability for Microwave Access), HSDPA (High Speed Downlink Packet Access), and the like.

The short-range communication module 114 is a module for supporting a short-range communication. Here, it may be used a short-range communication technology including Bluetooth, Radio Frequency IDentification (RFID), Infrared Data Association (IrDA), Ultra WideBand (UWB), ZigBee, and the like.

The location information module 115 is a module for checking or acquiring a location of the mobile terminal, and there is a GPS module as a representative example.

Referring to FIG. 1, the A/V(audio/video) input unit 120 receives an audio or video signal, and the A/V (audio/video) input unit 120 may include a camera 121 and a microphone 122. The camera 121 processes a image frame, such as still picture or video, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the mobile terminal 100 such as an opened or closed state of the mobile terminal 100, a location of the mobile terminal 100, an orientation of the mobile terminal 100, and the like, and generates a sensing signal for controlling the operation of the mobile terminal 100. For example, when the mobile terminal 100 is a slide phone type, it may sense an opened or closed state of the slide phone. Furthermore, the sensing unit 140 takes charge of a sensing function associated with whether or not power is supplied from the power supply unit 190, or whether or not an external device is coupled to the interface unit 170.

The output unit 150 is configured to provide an output for audio signal, video signal, or alarm signal, and the output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a terminal body through a region occupied by the display unit 151 of the terminal body.

Two or more display units 151 may be implemented according to a configured aspect of the mobile terminal 100. For instance, a plurality of the display units 151 may be arranged on one surface to be spaced apart from or integrated with each other, or may be arranged on different surfaces.

When the display unit 151 and a touch sensitive sensor (hereinafter, referred to as a "touch sensor") have an interlayer structure (hereinafter, referred to as a "touch screen"), the display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When there is a touch input to the touch sensor, the corresponding signals are transmitted to a touch controller (not shown). The touch controller processes the received signals, and then transmits corresponding data to the controller 180. Accordingly, the controller 180 may sense which region of the display unit 151 has been touched.

Referring to FIG. 1, a proximity sensor 141 may be arranged at an inner region of the mobile terminal 100 covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The examples of the proximity sensor may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of convenience of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events in a vibration manner. Since the video or audio signals can be output through the display unit 151 or the audio output unit 152, the display unit 151 and the audio output module 152 may be categorized into a part of the alarm 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects through a user's direct contact, or a user's muscular sense using a finger or a hand. The haptic module 154 may be implemented in two or more in number according to the configuration of the mobile terminal 100.

The memory 160 may store a program for processing and controlling the controller 180. Alternatively, the memory 160 may temporarily store input/output data (e.g., phonebook data, messages, audios, still images, videos, and the like). Also, the memory 160 may store data related to various patterns of vibrations and sounds outputted upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 for reproducing multimedia data. The multimedia module 181 may be implemented in an integrated manner within the controller 180 or may be implemented in a separate manner from the controller 180.

Furthermore, the controller 180 can perform a pattern recognition processing so as to recognize writing or drawing input on the touch screen as text or image.

Furthermore, the controller 180 may implement a lock state for limiting the user's control command input to applications when the state of the mobile terminal satisfies the prescribed condition. Furthermore, the controller 180 may control a lock screen displayed in the lock state based on a touch input sensed over the display unit 151 (hereinafter, referred to as a "touch screen") in the lock state.

The power supply unit 190 receives external power and internal power under the control of the controller 180 to provide power required by various components.

Various embodiments described herein may be implemented in a medium that can be read by a computer or similar device using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units designed to perform the functions described herein. In some cases, such embodiments may be implemented in the controller 180 itself.

For software implementation, the embodiments such as procedures or functions may be implemented together with separate software modules. The software modules may perform at least one function or operation described herein.

Software codes can be implemented by a software application written in any suitable programming language. The software codes may be stored in the memory 160 and executed by the controller 180.

Hereinafter, a mobile terminal according to an embodiment of the present disclosure described in FIG. 1, or a mobile terminal disposed with constituent elements of the mobile terminal, or the structure of a mobile terminal will be described.

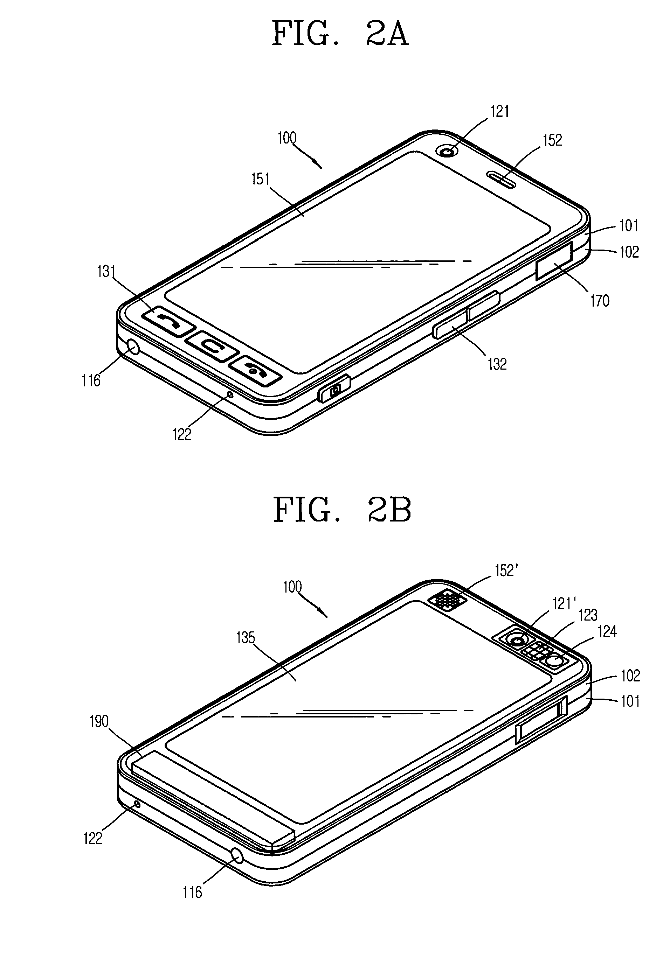

FIG. 2A is a front perspective view illustrating an example of a mobile terminal according to an embodiment of the present disclosure or an example of a mobile terminal, and FIG. 2B is a rear perspective view illustrating the mobile terminal in FIG. 2A.

The mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

According to the drawing, the terminal body 100 (hereinafter, referred to as a "body") may include a front surface, a lateral surface, and a rear surface. Furthermore, the body may include both ends thereof formed along the length direction.

The body 100 includes a case (casing, housing, cover, etc.) forming an appearance of the terminal. In this embodiment, the case may be divided into a front surface (hereinafter, referred to as a "front case") 101 and a rear surface (hereinafter, referred to as a "rear case") 102. Various electronic components may be incorporated into a space formed between the front case 101 and rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (130/131, 132), a microphone 122, an interface 170, and the like may be arranged on the terminal body 100, mainly on the front case 101.

The display unit 151 occupies a most portion of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102. On the contrary, the microphone 122 may be disposed at the other end of the body 100.

The user input unit 130 is manipulated to receive a command for controlling the operation of the portable terminal 100, and may include a plurality of manipulation units 131, 132. The manipulation units 131, 132 may be commonly designated as a manipulating portion, and any method may be employed if it is a tactile manner allowing the user to perform manipulation with a tactile feeling.

The content inputted by the manipulation units 131, 132 may be set in various ways. For example, the first manipulation unit 131 may receive a command, such as start, end, scroll, or the like, and the second manipulation unit 132 may receive a command, such as controlling a volume level being outputted from the audio output unit 152, or switching it into a touch recognition mode of the display unit 151.

Referring to FIG. 2B, an audio output unit 152' may be additionally disposed on a rear surface, namely, a rear case 102, of the terminal body. The audio output unit 152' together with the audio output unit 152 (refer to FIG. 2A) can implement a stereo function, and it may be also used to implement a speaker phone mode during a phone call.

Furthermore, a power supply unit 190 for supplying power to the mobile terminal 100 may be mounted on a rear surface of the terminal body. The power supply unit 190 may be configured so as to be incorporated in the terminal body, or directly detachable from the outside of the terminal body.

Furthermore, a touch pad 135 for detecting a touch may be additionally mounted on the rear case 102. The touch pad 135 may be configured in an optical transmission type similarly to the display unit 151. In this case, if the display unit 151 is configured to output visual information from both sides of the display unit 151, then the visual information may be also recognized through the touch pad 135. The information being outputted from the both sides thereof may be controlled by the touch pad 135. In addition, a display may be additionally mounted on the touch pad 135, and a touch screen may be also disposed on the rear case 102.

Furthermore, a camera 121' may be additionally mounted on the rear case 102 of the terminal body. The camera 121' has an image capturing direction, which is substantially opposite to the direction of the camera 121 (refer to FIG. 2A), and may have different pixels from those of the first video input unit 121.

For example, that the camera 121 may preferably have a relatively small number of pixels enough not to cause a difficulty when the user captures his or her own face and sends it to the other party during a video call or the like, and the camera 121' has a relatively large number of pixels since the user often captures a general object that is not sent immediately. The cameras 121' may be provided in the terminal body 100 in a rotatable and popupable manner.

Furthermore, a flash 123 and a mirror 124 may be additionally disposed adjacent to the camera 121'. The flash 123 illuminates light toward an object when capturing the object with the camera 121'. The mirror allows the user to look at his or her own face, or the like, in a reflected way when capturing himself or herself (in a self-portrait mode) by using the camera 121'.

Furthermore, an audio output unit 152' may be additionally disposed on a rear surface of the terminal body. The audio output unit 152' together with the audio output unit 152 (refer to FIG. 2A) can implement a stereo function, and it may be also used to implement a speaker phone mode during a phone call.

Furthermore, a power supply unit 190 for supplying power to the portable terminal 100 may be mounted on a rear surface of the terminal body. The power supply unit 190 may be configured so as to be incorporated in the terminal body, or directly detachable from the outside of the terminal body.

A touch pad 135 for detecting a touch may be additionally mounted on the rear case 102. The touch pad 135 may be configured in an optical transmission type similarly to the display unit 151. In this case, if the display unit 151 is configured to output visual information from both sides of the display unit 151, then the visual information may be also recognized through the touch pad 135. The information being outputted from the both sides thereof may be controlled by the touch pad 135. In addition, a display may be additionally mounted on the touch pad 135, and a touch screen may be also disposed on the rear case 102.

The touch pad 135 operates in a reciprocal relation to the display unit 151 of the front case 101. The touch pad 135 may be disposed in parallel on a rear side of the display unit 151. The touch pad 135 may have the same or a smaller size as or than that of the display unit 151.

Furthermore, the controller 180 of a mobile terminal capable of including at least one of the foregoing constituent elements according to an embodiment of the present disclosure may move a previously displayed base region and a newly displayed base region while transforming the shape of them when a base region (or page) displayed on the display unit is switched to another base region.

First, the foregoing base region and an object contained in the base region will be described, and then a method of moving a base region and an object contained therein while transforming the shape of them will be described in detail.

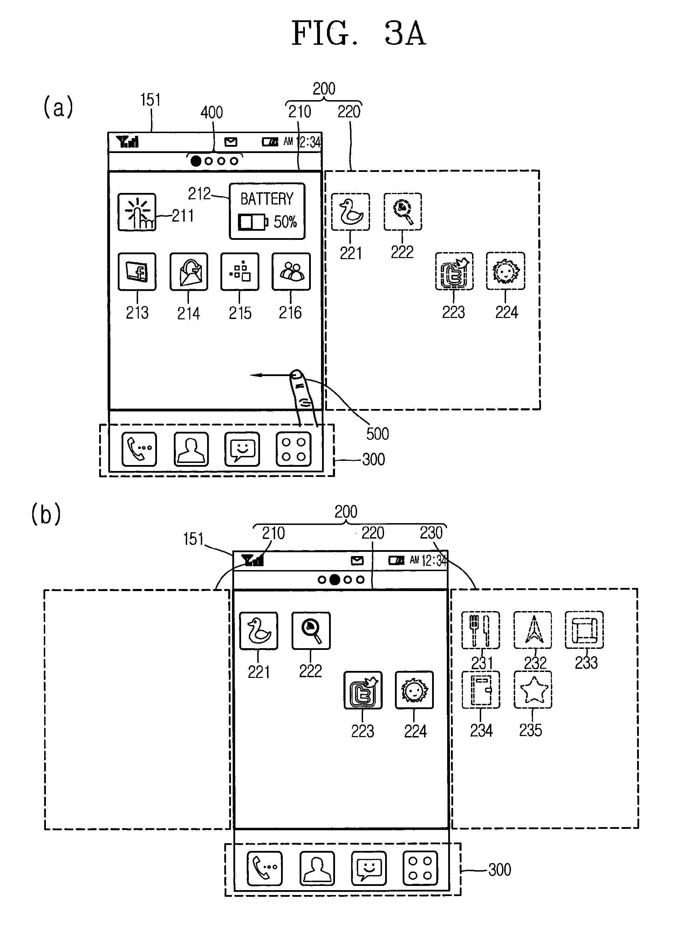

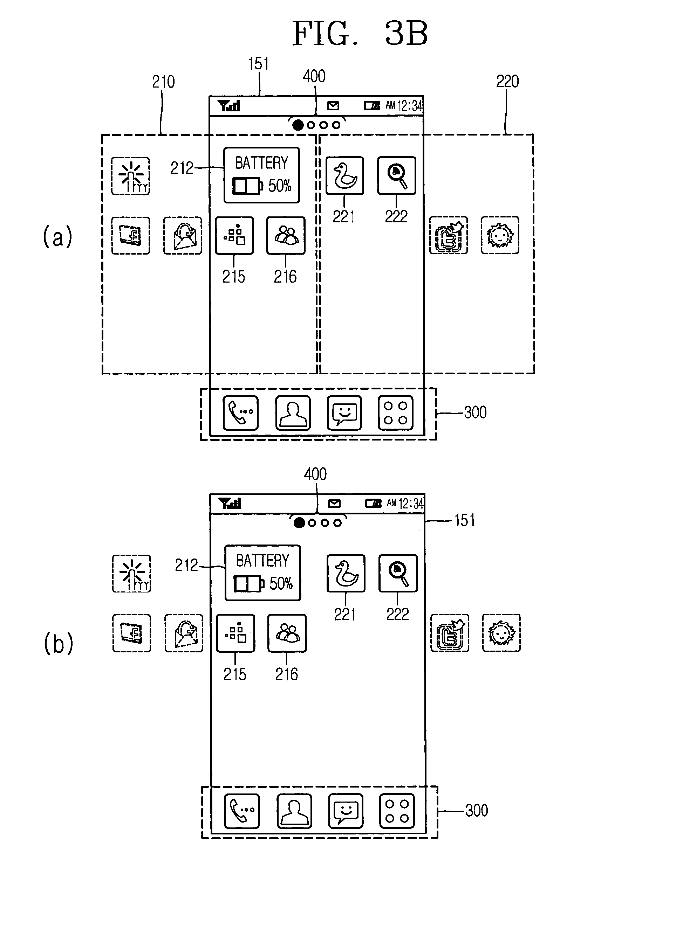

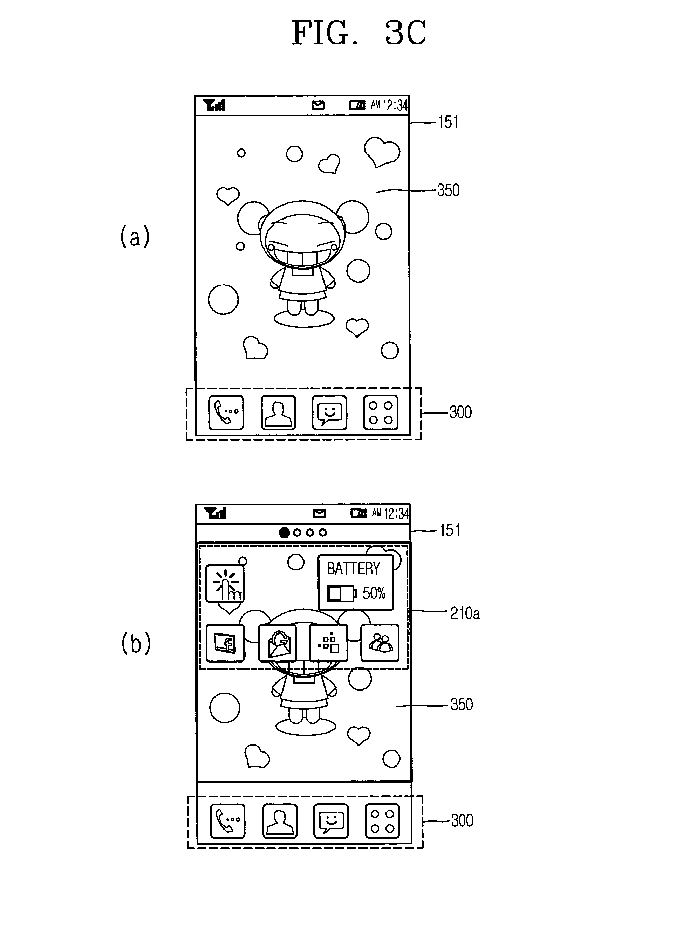

FIGS. 3A, 3B and 3C are conceptual views illustrating a method of switching a page displayed on the display unit to another page in a mobile terminal according to an embodiment of the present disclosure.

The controller 180 (refer to FIG. 1) of a mobile terminal according to an embodiment of the present disclosure may display an idle screen, home screen or menu screen on the display unit. The idle screen, home screen or menu screen may include at least one object, and the object may be an icon or widget of an application installed in the mobile terminal.

Meanwhile, the idle screen, home screen or menu screen may include a plurality of base regions (or pages) 210, 220 according to the user's selection or the number of applications installed in the terminal as illustrated in FIG. 3A(a).

The idle screen, home screen or menu screen, as illustrated in FIG. 3(a), may include an identification information region 400 for informing that currently displayed objects correspond to which numbers of base regions among a plurality of base regions and a base region 200 in which objects are displayed. Moreover, the idle screen, home screen or menu screen may further include a basic region 300 in which icons corresponding to specific applications previously installed by the user's selection or the controller are displayed in a fixed manner.

The icons 310, 320, 330 displayed on the basic region 300 can be continuously displayed on the basic region 300 even when a currently displayed base region 210 is switched to another base region 220.

Hereinafter, a "base region" capable of containing objects such as an icon or widget will be described without additionally distinguishing the terms of the idle screen, home screen or menu screen.

The base region may have a size corresponding to the display unit display unit 151 (refer to FIG. 1), and may include a preset number of objects to allow the user to recognize them.

Furthermore, the base region may be switched from a currently displayed base region on the display unit to another base region different from the displayed base region by a touch gesture applied by the user.

In other words, the controller 180 may switch the first base region 210 displayed on the display unit as illustrated in FIG. 3A(a) to the second base region 220 as illustrated in FIG. 3A(b) in response to a touch gesture 500 applied on the display unit 151. Furthermore, though not shown in the drawing, in addition to the first and the second base region, more base regions such as a third and a fourth base region, and the like may be displayed on the display unit. The number of base regions may be determined by the user's selection or determined by the number applications installed in the terminal.

Furthermore, as illustrated in FIG. 3B(a), a plurality of base region 210, 220 may be displayed at the same time on the display unit by the foregoing touch gesture 500, and only any one of the plurality of base regions may be displayed on the display unit at a time point when the touch gesture is terminated.

Furthermore, the base region may be displayed in a transparent manner such that the border and area of the base region is not distinguished from other screens displayed on the display unit as illustrated in FIGS. 3B(a) and 3B(b).

In other words, the controller may display only objects (icons or widgets) contained in a base region without displaying a boundary surface of the base region as illustrated in FIG. 3B(b).

Furthermore, as illustrated in FIG. 3C(a), a home screen (or background screen) 350 may be displayed on the display unit by the user's selection or the setting of the controller, and the controller may control the display unit 151 such that the home screen and base region 210 are displayed in an overlapped manner.

The controller 180 may control the display unit 151 not to switch the home screen 350 when the base region 210 displayed on the display unit is switched to another base region by the user's selection.

Moreover, the base region may be controlled to have a transparency to identify the home screen, and in this case, objects (icons or widgets) contained in the base region may be displayed in a non-transparent manner to be identified by the user.

As described above, a mobile terminal according to the present disclosure may display any one of a plurality of base regions on the display unit, and switch a currently displayed base region to another base region based on a touch gesture applied by the user. Moreover, when a currently displayed base region is switched to another base region based on the touch gesture, a mobile terminal according to the present disclosure may transform at least one shape of the base region and an object contained in the base region.

Hereinafter, a method of transforming at least one shape of the base region and an object contained in the base region will be described in more detail with reference to the accompanying drawings.

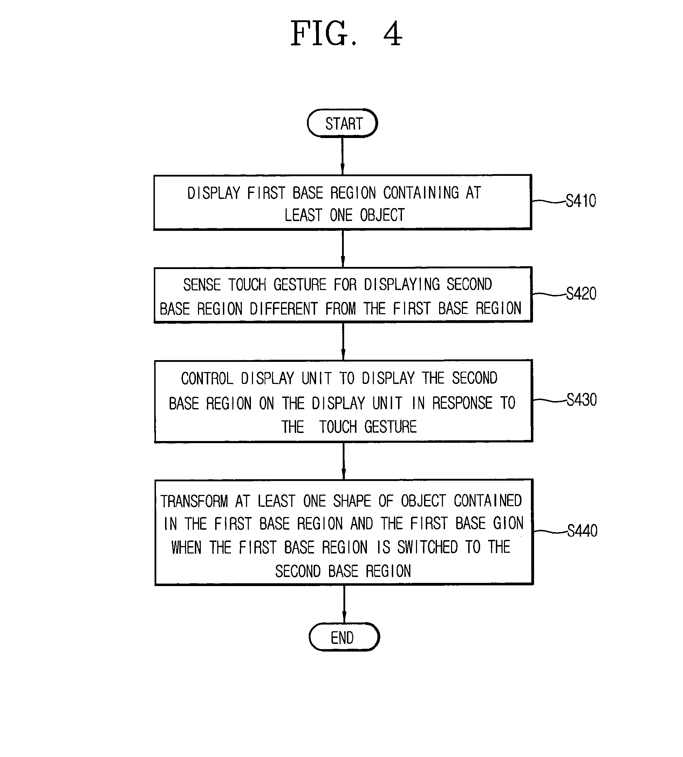

FIG. 4 is a flow chart for explaining a method of switching a base region in a mobile terminal according to an embodiment of the present disclosure.

First, a mobile terminal according to an embodiment of the present disclosure displays a first base region (refer to reference numeral 210 in FIG. 3A(a)) corresponding to any one of the foregoing idle screen, home screen or menu screen on the display unit 151 (S410).

Here, the first base region 210 may include at least one object as described above, and a position at which the object is disposed may be determined by the selection of the user or controller 180.

Next, the sensing unit 140 senses a touch gesture (refer to reference numeral 500 in FIG. 3A(a)) applied on the display unit 151 in a state that the first base region 210 is displayed on the display unit 151 (S420).

The touch gesture is a touch input for switching the first base region 210 displayed on the display unit 151 as illustrated in FIG. 3A(a) to the second base region 220 as illustrated in FIG. 3A(b).

As illustrated in FIG. 3A(a), the touch gesture 500 may be at least one of flicking, dragging and slide touch inputs applied in a predetermined direction, and the touch gesture may be a touch input with a preset various schemes in addition to them.

Next, the controller 180 controls the display unit to display a second base region on the display unit 151 in response to the touch gesture (S430).

For example, when the touch gesture 500 is applied to the first base region 210 as illustrated in FIG. 3A(a), the controller 180 displays the second base region 220 instead of the first base region 210 on the display unit 151 as illustrated in FIG. 3A(b) in response to the touch gesture 500.

In this case, the controller 180 determines a direction to which the touch gesture 500 is applied, and displays a base region existing in a direction corresponding to the direction to which the touch gesture 500 is applied instead of the first base region 210.

Meanwhile, when the first base region 210 is switched to the second base region 220 to display the second base region 220 on the display unit 151 in response to the touch gesture 500, the controller 180 may display the first base region 210 to be gradually disappeared on the display unit 151. In this case, it is shown to the user in such a way that the first base region 210 seems to be moved on the display unit 151, and the second base region 220 is gradually displayed dependent on the movement of the first base region 210 by the touch gesture 500.

Furthermore, the controller 180 may transform at least one shape of an object contained in the first base region 210 and the first base region 210 when the first base region 210 is switched to the second base region 220 in response to the touch gesture 500 (S440).

In other words, in this case, the controller 180 may transform the shape of the first base region 210 while moving the first base region 210 in response to the touch gesture 500, or transform the shape of an object contained in the first base region 210 based on the shape of the first base region 210 being transformed.

Furthermore, the controller 180 may control the display unit 151 to display at least part of the first base region 210 and second base region 220 in a transparent manner when the first and the second base region 210, 220 are moved in response to the touch gesture 500.

For example, the controller 180 may display a region corresponding to the movement direction of the touch gesture in the first base region 210 in a more transparent manner than the other region. Furthermore, the controller 180 may control the display unit 151 such that a transparency of the first base region 210 is varied according to an occupied area on the display unit 151, and control the display unit 151 such that a transparency of the first base region is varied according to a displayed area on the display unit 151. In other words, the controller 180 may control the display unit 151 such that a transparency of the first base region is varied according to the extent that the first base region 210 is moved.

Meanwhile, as described above, the method of allowing the controller 180 to control a transparency of the first base region 210 may be also applicable to the second base region 220 in a similar manner.

Hereinafter, a method of transforming at least one of the shape of a first base region and the shape of an object contained in the first base region in response to the touch gesture in the foregoing step S440 will be described in more detail with reference to the drawing. Furthermore, in the corresponding manner, a method of transforming the shape of the second base region along therewith will be described in more detail with reference to the drawing.

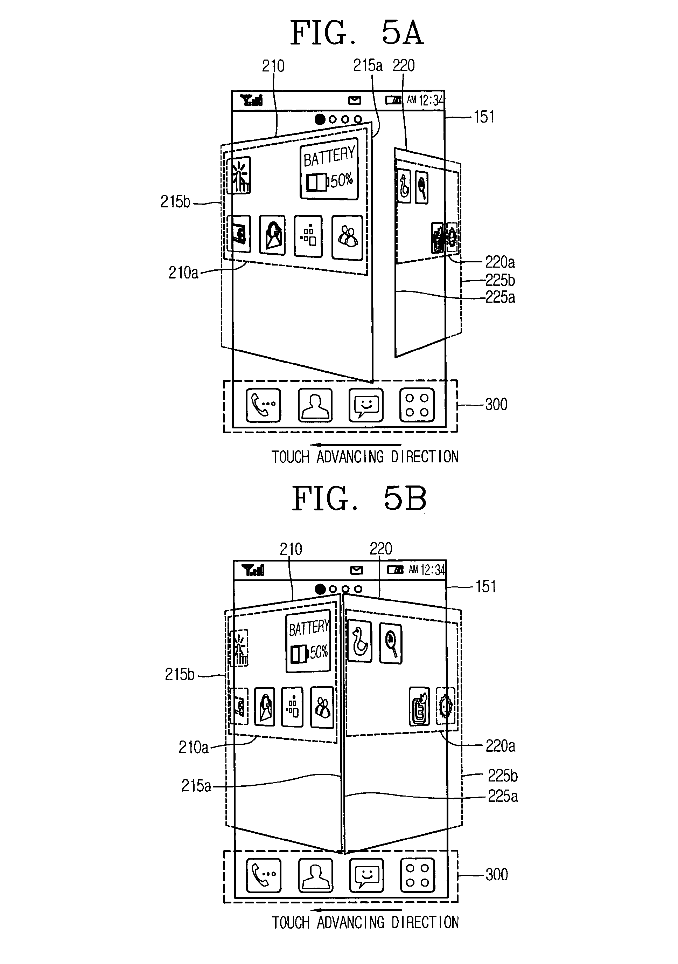

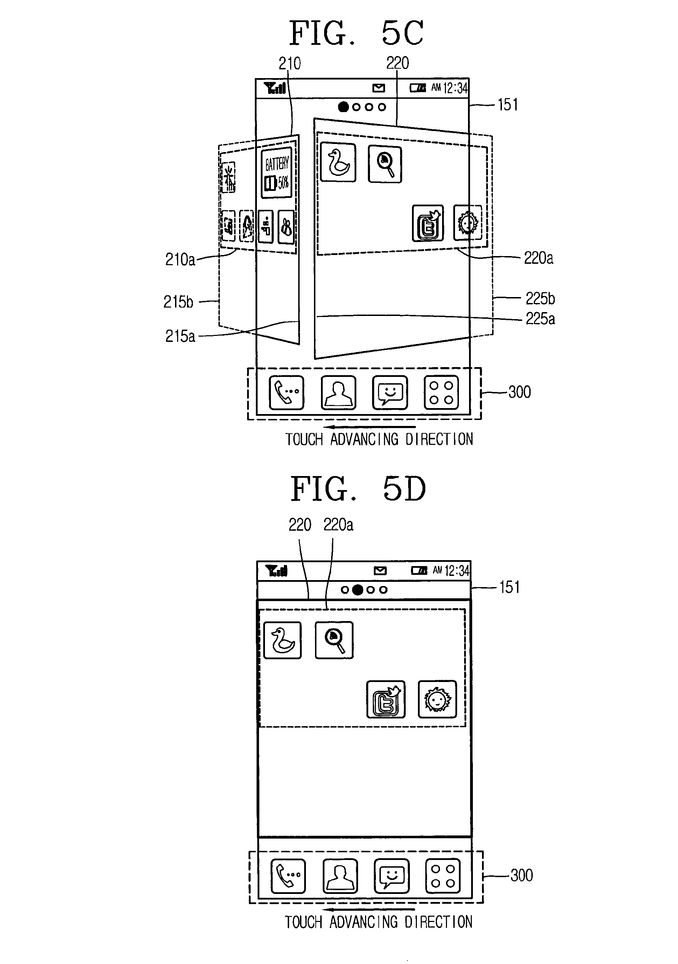

FIGS. 5A, 5B, 5C and 5D are conceptual views for explaining a method of switching a base region in a mobile terminal according to a first embodiment of the present disclosure.

As described above, when the touch gesture 500 for switching the first base region 210 to the second base region is applied in a state that the first base region 210 (refer to FIG. 3A(a)) is displayed on the display unit 151, the controller 180 displays the second base region 220 on the display unit 151 while moving the first base region 210 in a direction corresponding to the touch gesture 500.

In other words, the first and the second base region 210, 220 may be displayed at the same time on the display unit 151.

In this case, the controller 180 may transform the shape of the first base region 210 while moving the first base region 210 in an advancing direction of the touch gesture such that the length of a first edge 215a adjacent to the second base region 220 among edges of the first base region 210 is larger than that of a second edge 215b facing the first edge 215a as illustrated in FIG. 5A. In this case, the first base region 210 is changed from a rectangular shape to a trapezoidal shape based on the movement according to the touch gesture, and the controller 180 may transform the shape of objects 210a contained in the first base region 210 at the same time as the shape of the first base region 210 is changed to a trapezoid. In other words, as illustrated in FIG. 5A, the objects 210a contained in the first base region 210 may be moved while their shapes are transformed to a trapezoidal shape in response to the touch gesture.

Furthermore, the controller 180 display part of the second base region 220 on the display unit 151 in interlock with the movement of the first base region 210 as illustrated in FIG. 5A. In this case, the controller 180 may transform the length of a third edge 225a adjacent to the first edge 215a among edges of the second base region into a length greater than that of a fourth edge 225b facing the third edge 225a, and in this case, the second base region 220 may be transformed into a trapezoidal shape.

In this case, as described above, as the shape of the second base region 220 is transformed into a trapezoidal shape, the shape of the objects 220a contained in the second base region 220 may be transformed at the same time. In other words, as illustrated in FIG. 5A, the objects 220a contained in the second base region 220 may be moved while being transformed into a trapezoidal shape in response to the touch gesture.

On the other hand, the controller 180 may control the first and the second base region 210, 220 displayed on the display unit 151 such that the size thereof is dependent on a range in which the first and the second base region 210, 220 are displayed on the display unit 151. In other words, the controller 180 may enlarge the size of a base region having a larger range between the first and the second base region 210, 220 to display it on the display unit 151.

As illustrated in FIG. 5A, when a displayed range of the first base region 210 is larger than that of the second base region 220, the size of the first base region 210 is controlled to be larger than that of the second base region 220. In other words, in this case, the controller 180 may control the display unit 151 such that the length of the first edge 215a is larger than that of the third edge 225b.

Furthermore, as illustrated in FIG. 5B, when a displayed range of the first base region 210 is the same as that of the second base region 220 on the display unit 151, the controller controls the display unit 151 such that the sizes of the first and the second base region are the same, and in this case, the lengths of the first and the third edge 215a, 225a are the same.

Similarly, as illustrated in FIG. 5C, when an area in which the second base region 220 is displayed on the display unit 151 is larger than that of the first base region 210 based on the touch gesture, the size of the second base region 220 may be larger than that of the first base region 210.

Meanwhile, when the movement according to the touch gesture is completed, and thus the second base region 220 is displayed as a whole on the display unit 151 as illustrated in FIG. 5D, the controller 180 switches the shape of the second base region 220 that has been a trapezoidal shape to a rectangular shape.

In this manner, the controller 180 may control the display unit 151 such that the edge lengths of the first and the second base region are varied according to the extent the first and the second base region are displayed on the display unit 151 as described above.

Meanwhile, the controller 180 may not display a guideline for indicating a base region on the display unit 151, and controls the display unit 151 such that only objects contained in the base region are identified by the user.

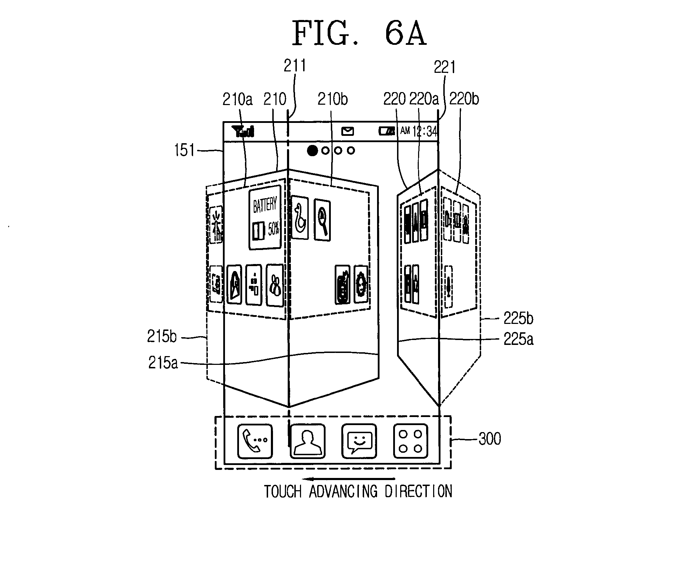

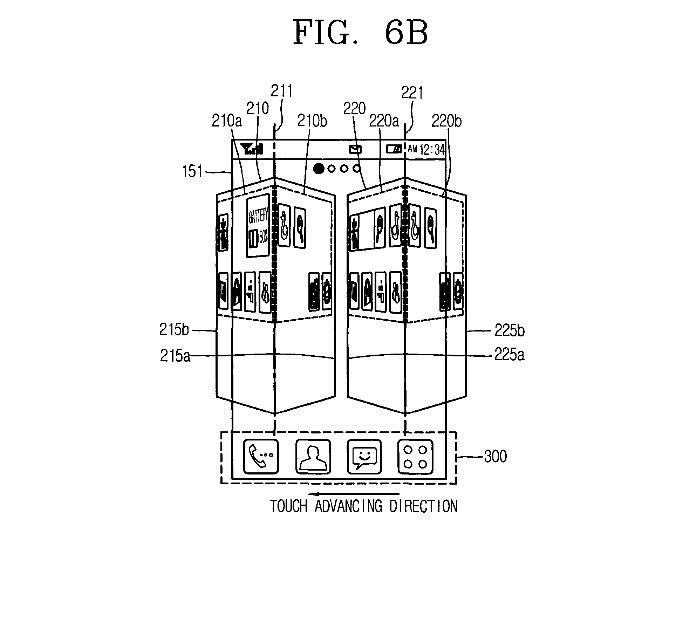

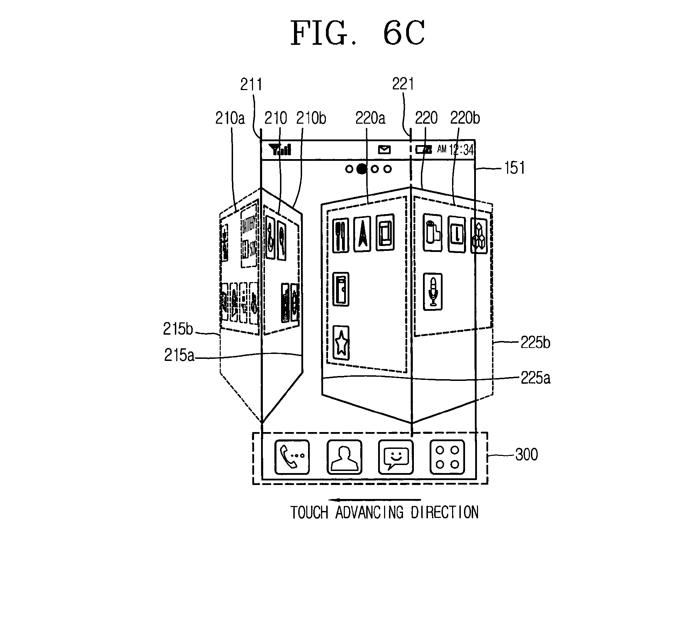

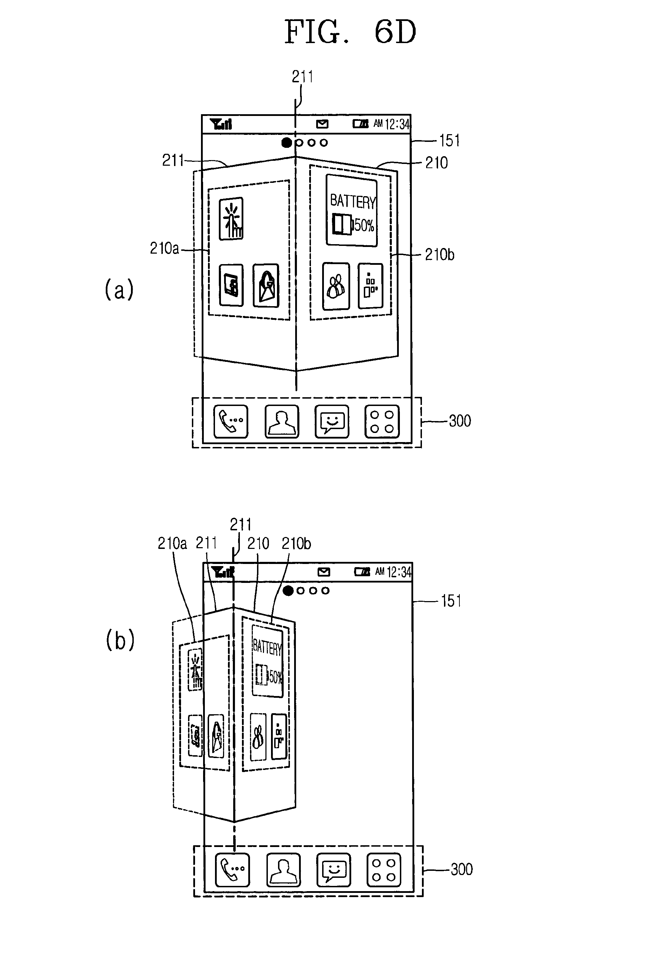

Hereinafter, a second embodiment in which the shape of a first base region and the shape of an object contained in the first base region are transformed in response to the touch gesture in the foregoing step S440. FIGS. 6A, 6B, 6C and 6D are conceptual views for explaining a method of switching a base region in a mobile terminal according to a second embodiment of the present disclosure.

As described above, when the touch gesture 500 for switching the first base region 210 to the second base region is applied in a state that the first base region 210 (refer to FIG. 3A(a)) is displayed on the display unit 151, the controller 180 displays the second base region 220 on the display unit 151 while moving the first base region 210 in a direction corresponding to the touch gesture 500.

In other words, the first and the second base region 210, 220 may be displayed at the same time on the display unit 151.

In this case, the controller 180 may gradually reduce the size of the first base region 210 around a first reference axis 211 on the first base region 210 while moving the first base region 210 in an advancing direction of the touch gesture as illustrated in FIG. 6A. At this time, the controller 180 may control the display unit 151 such that the length of the first and the second edge 215a, 215b parallel to the first reference axis 211 is gradually decreased as illustrated in FIG. 6B as the first base region 210 is moved.

Furthermore, the controller 180 may reduce the area of objects contained a first and a second object group 210a, 210b contained in the first base region in interlock with the area of the first base region being gradually reduced around the first reference axis 211 as illustrated in FIGS. 6A, 6B and 6C.

On the other hand, the controller 180 may gradually display the second base region 220 on the display unit 151 in interlock with the first base region 210 being gradually disappeared.

In this case, the controller 180 may control the display unit 151 such that the size of the second base region 220 is gradually increased around a second reference axis 221 on the second base region 220 as increasing a range in which the second base region 220 is displayed on the display unit 151 as illustrated in FIGS. 6A, 6B and 6C. Furthermore, in this case, the length of the third and the fourth edge 225a, 225b in parallel to the second reference axis 221 is increased as increasing the range in which the second base region 220 is displayed on the display unit 151.

Furthermore, the controller 180 may gradually increase the area of objects contained in a first and a second object group 220a, 220b contained in the second base region in interlock with the area of the second base region 220 being gradually increased around the second reference axis 221 as illustrated in FIGS. 6A, 6B ad 6C.

Meanwhile, the controller 180 may control the display unit 151 such that a transparency of objects contained in the first base region 210 is varied as the size of the first base region 210 is changed around the first reference axis 211 as illustrated in FIG. 6D. The controller 180 may control the display unit 151 such that the user can feel a three-dimensional effect on the first base region by displaying at least part of objects adjacent to the first reference axis 211 in a more transparent manner than the other objects as illustrated in FIGS. 6D(a) and 6D(b) as the size of the first base region 210 is reduced.

Furthermore, though not shown in the drawing, the controller 180 may control the display unit 151 such that the transparency of objects is changed on the basis of the second reference axis 221 (refer to FIG. 6C) similarly to the first base region 210 in the second base region 220.

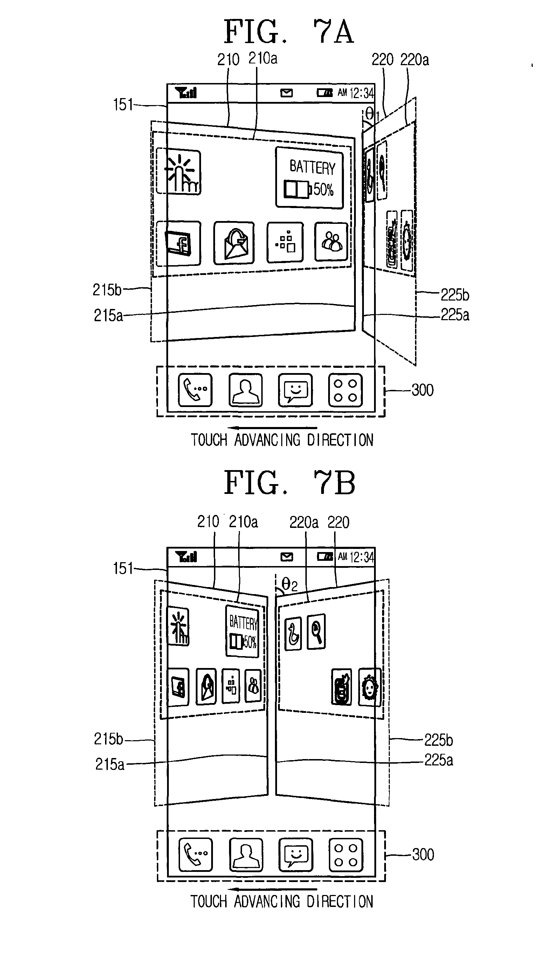

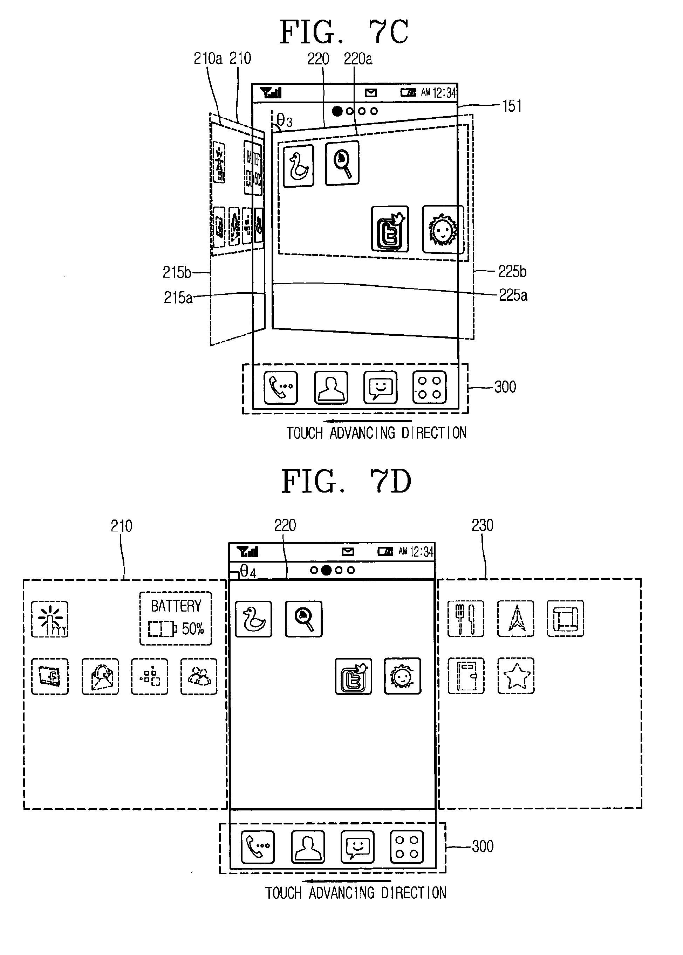

Hereinafter, a third embodiment in which the shape of a first base region and the shape of an object contained in the first base region are transformed in response to the touch gesture in the foregoing step S440. FIGS. 7A, 7B, 7C and 7D are conceptual views for explaining a method of switching a base region in a mobile terminal according to a third embodiment of the present disclosure.

As described above, when the touch gesture 500 for switching the first base region 210 to the second base region is applied in a state that the first base region 210 (refer to FIG. 3A(a)) is displayed on the display unit 151, the controller 180 displays the second base region 220 on the display unit 151 while moving the first base region 210 in a direction corresponding to the touch gesture 500.

In other words, the first and the second base region 210, 220 may be displayed at the same time on the display unit 151.

In this case, the controller 180 may transform the shape of the first base region 210 while moving the first base region 210 in an advancing direction of the touch gesture such that the length of a first edge 215a adjacent to the second base region 220 among edges of the first base region 210 is shorter than that of a second edge 215b facing the first edge 215a as illustrated in FIG. 7A. In this case, the first base region 210 is changed from a rectangular shape to a trapezoidal shape based on the movement according to the touch gesture, and the controller 180 may transform the shape of objects 210a contained in the first base region 210 at the same time as the shape of the first base region 210 is changed to a trapezoid. In other words, as illustrated in FIG. 7A, the objects 210a contained in the first base region 210 may be moved while their shapes are transformed to a trapezoidal shape in response to the touch gesture.

Furthermore, in the corresponding manner, the controller 180 display part of the second base region 220 on the display unit 151 in interlock with the movement of the first base region 210 as illustrated in FIG. 7A. In this case, the controller 180 may transform the length of a third edge 225a adjacent to the first edge 215a among edges of the second base region into a length shorter than that of a fourth edge 225b facing the third edge 225a, and in this case, the second base region 220 may be transformed into a trapezoidal shape.

In this case, as described above, as the shape of the second base region 220 is transformed into a trapezoidal shape, the shape of the objects 220a contained in the second base region 220 may be transformed at the same time. In other words, as illustrated in FIG. 7A, the objects 220a contained in the second base region 220 may be moved while being transformed into a trapezoidal shape in response to the touch gesture.

As described above, the controller 180 may incline the first and the second base region 210, 220 to have a preset angle based on a touch gesture for moving the first base region 210 and second base region 220.

For example, the controller 180 may incline the first and the second base region 210, 220 to have a preset angle on the basis of the first and the third edge 215a, 225a between the first and the second base region 210, 220, respectively.

For example, on the basis of the second base region 220, as illustrated in FIG. 7A, the second base region 220 may be displayed to be inclined with an angle of θ1 around a reference axis extended from the third edge 225a. Furthermore, as illustrated in FIG. 7B, when an area in which the second base region 220 is displayed is larger than that illustrated in FIG. 7A, the second base region 220 may be displayed to be inclined with an angle of θ2 which is different from the θ1 around the reference axis.

Furthermore, the controller 180 may control the second base region such that an inclination thereof is reduced as an area in which the second base region 220 is displayed is gradually increased as illustrated in FIGS. 7C and 7D.

Accordingly, as increasing an area in which the second base region 220 is displayed on the display unit 151, an angle between the reference axis and the second base region 220 may be increased (θ1 -> θ2 -> θ3 -> θ4). In other words, as increasing a range in which the second base region 220 is displayed on the display unit 151, an inclination of the second base region 220 may be reduced.

Furthermore, though not shown in the drawing, since an area of the first base region displayed on the display unit is gradually decreased according to the movement based on a touch gesture, an angle made between the first base region and a reference axis on the first base region may be gradually decreased. In other words, as reducing a range in which the first base region is displayed on the display unit, an inclination of the first base region may be abruptly changed.

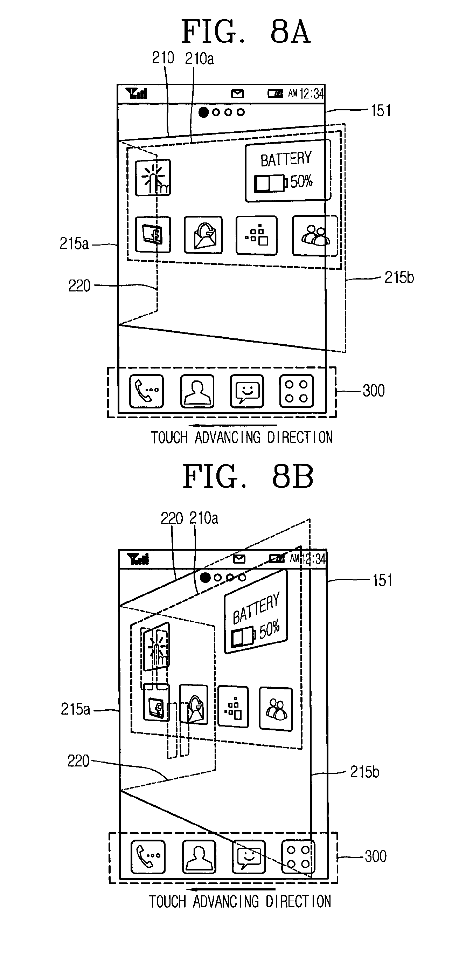

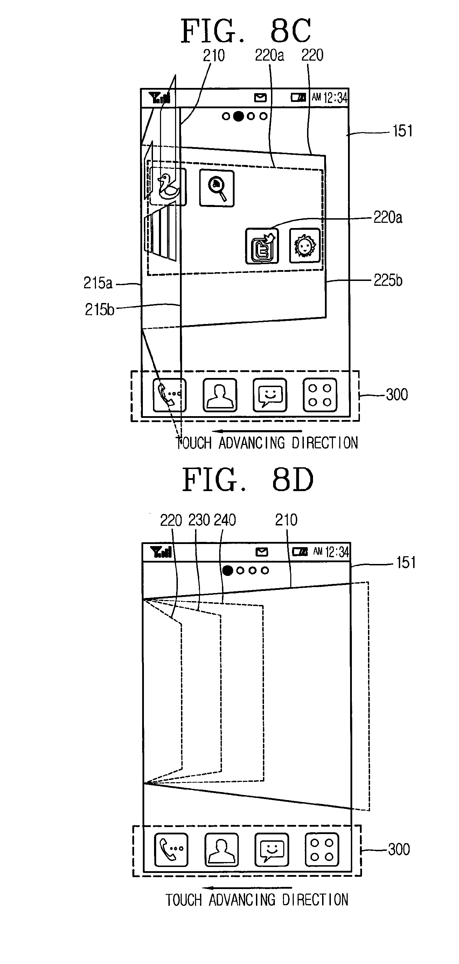

Hereinafter, a fourth embodiment in which the shape of a first base region and the shape of an object contained in the first base region are transformed in response to the touch gesture in the foregoing step S440. FIGS. 8A, 8B, 8C and 8D are conceptual views for explaining a method of switching a base region in a mobile terminal according to a fourth embodiment of the present disclosure.

As described above, when the touch gesture 500 for switching the first base region 210 to the second base region is applied in a state that the first base region 210 (refer to FIG. 3A(a)) is displayed on the display unit 151, the controller 180 displays the second base region 220 on the display unit 151 while moving the first base region 210 in a direction corresponding to the touch gesture 500.

In other words, the first and the second base region 210, 220 may be displayed at the same time on the display unit 151.

In this case, the controller 180 may rotationally moves the first base region 210 in an advancing direction of the touch gesture using the first edge 215a of the first base region as a virtual reference axis as illustrated in FIGS. 8A, 8B and 8C.

Furthermore, the controller 180 controls the first base region 210 such that a difference between the length of the first edge 215a and the length of the second edge 215b facing the first edge 215a is increased according to the extent that the first base region is rotated around the virtual reference axis.

Furthermore, the controller 180 may transform the shape of objects 210a contained in the first base region 210 at the same time as the shape of the first base region 210 is changed to a trapezoid. In other words, as illustrated in FIGS. 8A, 8B and 8C, the objects 210a contained in the first base region 210 may be moved while their shapes are transformed to a trapezoidal shape in response to the touch gesture.

Furthermore, the controller 180 displays the second base region 220 on the display unit 151 while rotationally moving the second base region 220 on the basis of the virtual reference axis in interlock with the first base region 210 being rotationally moved on the basis of the virtual reference axis as illustrated in FIGS. 8A, 8B and 8C.

At this time, the second base region 220 may be displayed to be overlapped with the first base region 210.

Meanwhile, the controller 180 may control the display unit 151 such that the size of the second base region 220 is gradually increased while being rotated around the virtual reference axis according to the extent that the first base region 210 is rotated.

In the second base region 220, the length of the third edge 225b located at a position corresponding to the second edge 215b among edges of the second base region 220 may be gradually increased according to the extent that the first base region 210 is rotated.

Meanwhile, the controller 180 may control the display unit 151 such that the length of the third edge 225b is always displayed to be shorter than that of the second edge 215b of the first base region 210, thereby allowing the user to feel that the second base region 220 seems to be located farther than the first base region 210.

Furthermore, first base region 210 may not be displayed any more on the display unit 151 when the extent that the first base region 210 is rotated around the virtual reference axis is equal to or greater than a reference angle, and in this case, the second base region 220 may be displayed as a whole on the display unit 151.

Meanwhile, even when the first and the second base region 210, 220 are moved in response to the touch gesture, the controller 180 may control the display unit 151 that an angle made between the first and the second base region 210, 220 on the basis of the virtual reference axis is maintained constant.

As an example, the controller 180 may always fix an angle made between the first and the second base region regardless of the number of base regions, and as another example, an angle made between the first and the second base region may be changed to correspond to the number of base regions.

For example, when there exist only two base regions such as a first and a second base region, an angle made between the first and the second base region may be 90 degrees, and when there exists three base regions such as a first, a second, and a third base region, an angle made between the first and the second base region may be 45 degrees.

Furthermore, the controller may control the display unit 151 such that the first and the second base region always have a fixed angle, for example, 90 degrees, regardless of the number of base regions.

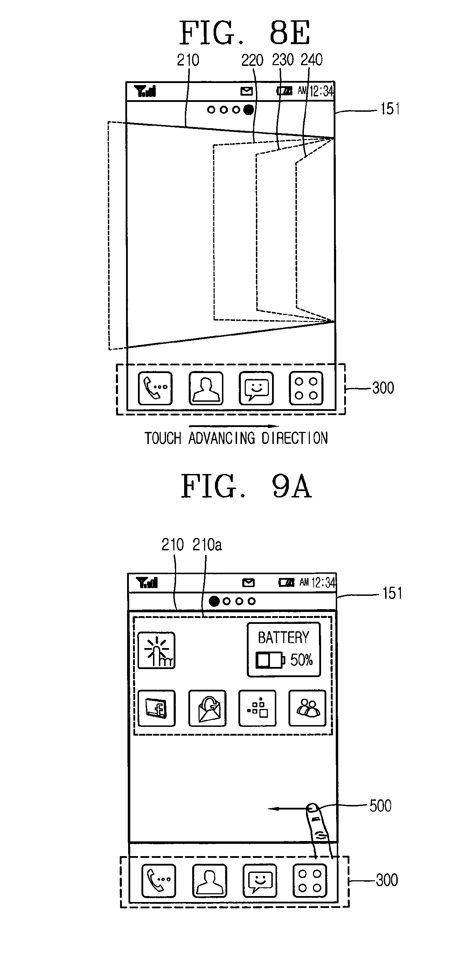

Furthermore, the controller 180 may change the direction of a virtual reference axis (corresponding to the first edge 215a or second edge 215b) around which the first and the second base region are rotationally moved according to the user's selection as illustrated in FIGS. 8D and 8E.

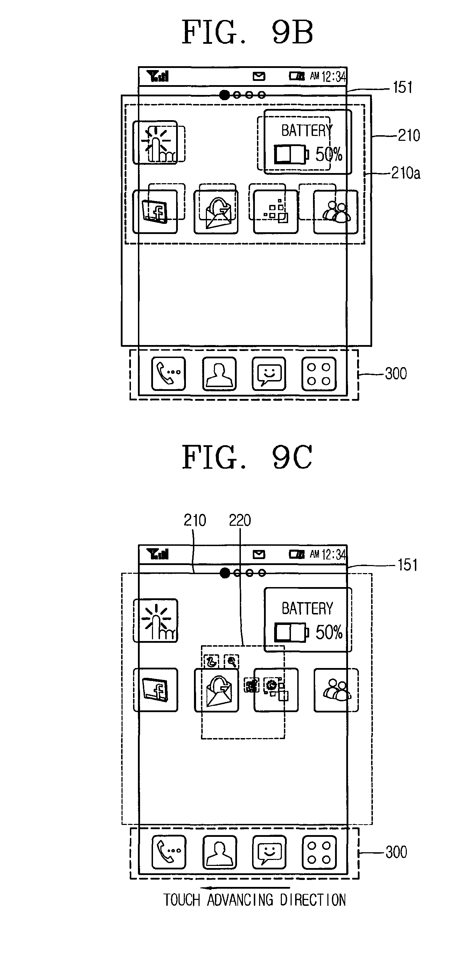

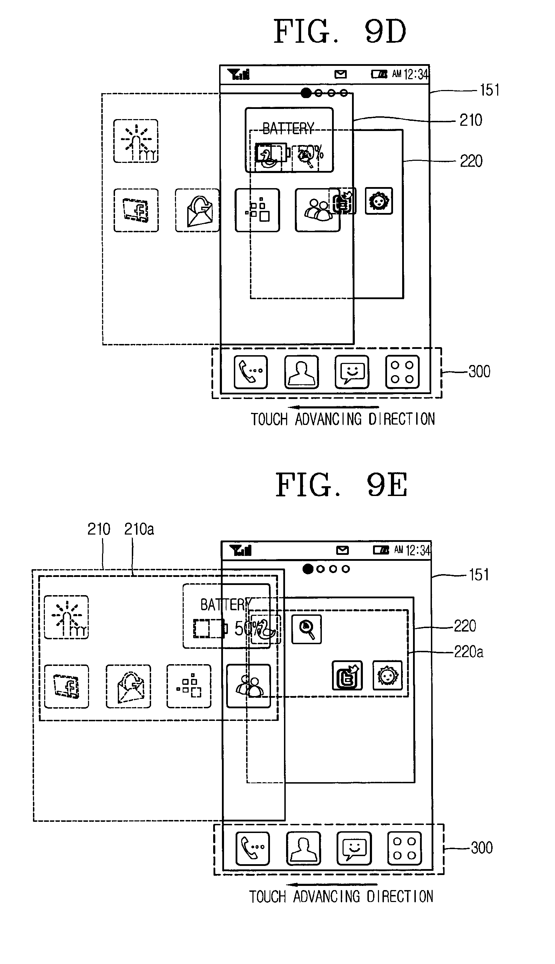

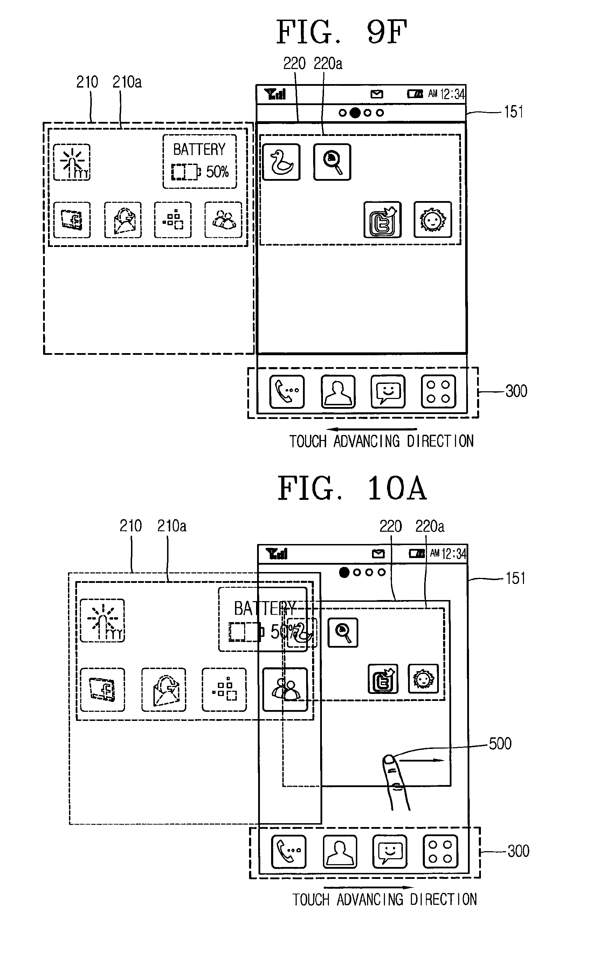

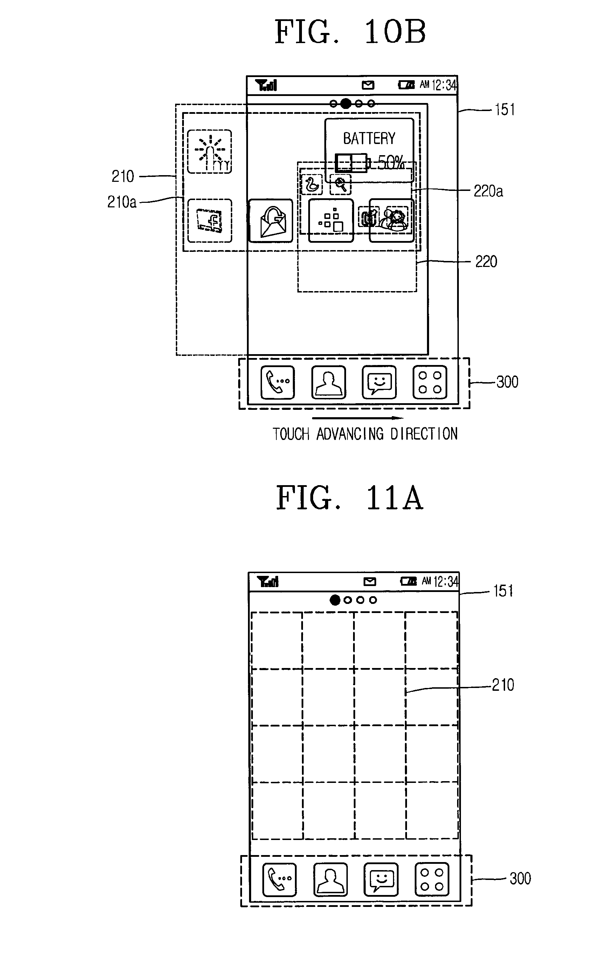

Hereinafter, a fifth and a sixth embodiment in which the shape of a first base region and the shape of an object contained in the first base region are transformed in response to the touch gesture in the foregoing step S440. FIGS. 9A, 9B, 9C and 9D are conceptual views for explaining a method of switching a base region in a mobile terminal according to a fifth embodiment of the present disclosure, and FIGS. 10A, 10B, 10C and 10D are conceptual views for explaining a method of switching a base region in a mobile terminal according to a sixth embodiment of the present disclosure.

As described above, when the touch gesture 500 for switching the first base region 210 to the second base region is applied in a state that the first base region 210 (refer to FIG. 3A(a)) is displayed on the display unit 151, the controller 180 displays the second base region 220 on the display unit 151 while moving the first base region 210 in a direction corresponding to the touch gesture 500.

In other words, the first and the second base region 210, 220 may be displayed at the same time on the display unit 151.

Meanwhile, the controller 180 may increase the first base region 210 to a preset size as illustrated in FIG. 9B in response to the touch gesture 500 being applied on the first base region 210 as illustrated in FIG. 9A. In this case, an object 210a contained in the first base region 210 may be also increased to the preset size in interlock with an increase of the first base region 210.

Furthermore, the second base region 220 may be overlapped with the first base region 210 in response to the touch gesture 500 (refer to FIG. 9A) as illustrated in FIG. 9C. In this case, the second base region 220 and objects 220a contained in the second base region 220 may be displayed in a state of being reduced by a preset size.

Meanwhile, the controller 180 may move the first base region 210 in an enlarged state in an advancing direction of the touch gesture as illustrated in FIGS. 9D and 9E, and display the second base region 220 and objects 220a contained in the second base region 220 while their sizes are gradually enlarged in interlock therewith.

Furthermore, the controller 180 may continuously enlarge the second base region 220 to a preset size such that the size of the second base region 220 corresponds to the size of the display unit 151 until a time point when the movement of the first base region 210 is completed as illustrated in FIGS. 9E and 9F.

Meanwhile, when a touch gesture for displaying the first base region 210 again is applied on the display unit 151 in a state that the second base region 220 is displayed as a whole on the display unit 151 as illustrated in FIG. 9F, the second base region 220 is gradually reduced as illustrated in FIG. 10A in a manner contrary to the foregoing.

Furthermore, the controller 180 gradually displays the first base region 210 in an enlarged state on the display unit 151 while being moved in an advancing direction of the touch gesture in interlock with the second base region 220 being gradually reduced as illustrated in FIGS. 10A and 10B.

On the other hand, according to the foregoing first through sixth embodiments, when the shape of a base region is changed, the controller may also change the shape of objects contained in the relevant base region at the same time, and control the display unit such that the transparency of objects contained in the base region is varied according to the movement direction of a touch gesture and the disposed location thereof.

As described above, a mobile terminal and a control method thereof according to an embodiment of the present disclosure may transform the shape of a page and an object contained therein when any one page of a plurality of pages is switched to another page based on a touch gesture, thereby providing visual amusement to the user.

Hereinafter a method of sequentially moving objects contained in a base region will be described in more detail with reference to the accompanying drawings.

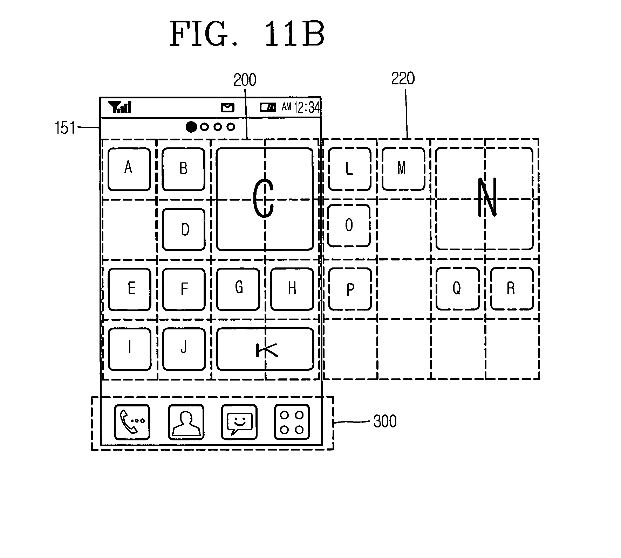

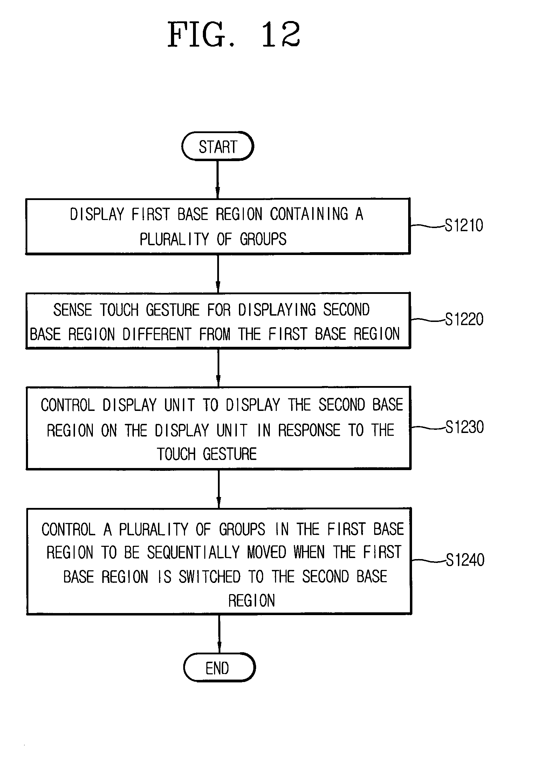

FIGS. 11A and 11B are conceptual views for explaining a method of disposing an object in a mobile terminal according to an embodiment of the present disclosure, and FIG. 12 is a flow chart for explaining a method of sequentially moving objects contained in a base region in a mobile terminal according to an embodiment of the present disclosure.

First, a method of disposing an object on a base region will be described with reference to FIGS. 11A and 11B. As described above, at least one object may be disposed on the first base region 210. Here, the object may be an icon or widget of an application installed in the mobile terminal.

Meanwhile, the first base region 210 may be divided into a preset number of regions, and the object may be disposed in at least one of the divided regions.

For example, as illustrated in FIG. 11A, the first base region 210 may be divided into sixteen regions (or cells) to correspond to a matrix of 4 x 4, and the minimum cell size in which the object can be disposed may be a unit cell.

In other words, one object may be disposed to the maximum in a unit cell as an object "A" is disposed in FIG. 11B, and disposing two or more cells in the one unit cell is limited.

Meanwhile, one object may be disposed on a plurality of cells as an object "C" is disposed in FIG. 11B, and the number of cells occupied by an object may be on the basis of the user's selection or on the basis of the setting of the controller 180.

Furthermore, the controller 180 may group objects disposed on the first base region 210 into a plurality of groups based on a preset criterion as illustrated in FIG. 11B, and sequentially move groups contained in the first base region 210 based on a touch gesture for moving the first base region 210 to the second base region 220.

Hereinafter, a method of sequentially moving objects contained in a base region in a mobile terminal will be described with reference to FIG. 12.

First, a mobile terminal according to an embodiment of the present disclosure displays a first base region (refer to reference numeral 210 in FIG. 3A(a)) containing at least one group on the display unit 151 (S1210).

Here, the at least one group may include at least one object, and the at least one group may be determined by the controller 180 based on a preset criterion.

Next, the sensing unit 140 senses a touch gesture (refer to reference numeral 500 in FIG. 3A(a)) applied on the display unit 151 in a state that the first base region 210 is displayed on the display unit 151 (S1220).

The touch gesture is a touch input for switching the first base region 210 displayed on the display unit 151 as illustrated in FIG. 3A(a) to the second base region 220 as illustrated in FIG. 3A(b).

As illustrated in FIG. 3A(a), the touch gesture 500 may be at least one of flicking, dragging and slide touch inputs applied in a predetermined direction, and the touch gesture may be a touch input with a preset various schemes in addition to them.

Next, the controller 180 controls the display unit to display a second base region on the display unit 151 in response to the touch gesture (S1230).

For example, when the touch gesture 500 is applied to the first base region 210 as illustrated in FIG. 3A(a), the controller 180 displays the second base region 220 instead of the first base region 210 on the display unit 151 as illustrated in FIG. 3A(b) in response to the touch gesture 500.

In this case, the controller 180 determines a direction to which the touch gesture 500 is applied, and displays a base region existing in a direction corresponding to the direction to which the touch gesture 500 is applied instead of the first base region 210.

Meanwhile, when the first base region 210 is switched to the second base region 220 to display the second base region 220 on the display unit 151 in response to the touch gesture 500, the controller 180 may control the display unit 151 to sequentially move a plurality of groups contained in the first base region 210 (S1240).

In other words, in this case, the controller 180 may sequentially move a plurality of groups contained in the first base region 210 while moving the first base region 210 in response to the touch gesture 500.

Here, the sequence for moving a plurality of groups contained in the first base region 210 may be determined based on a position to which the touch gesture 500 is applied, and for example, the controller 180 may move a group displayed at a position corresponding to the start position of the touch gesture 500 as the first priority. Furthermore, the controller 180 may move at least one group adjacent to the first group as the second priority.

Hereinafter, an embodiment of sequentially moving a plurality of groups contained in the first base region in response to the touch gesture will be described in more detail with reference to the drawing. Furthermore, in the corresponding manner, a method of moving a plurality of groups contained in the second base region will be described in more detail with reference to the drawing.

First, a first embodiment of sequentially moving a plurality of groups contained in first base region will be described.

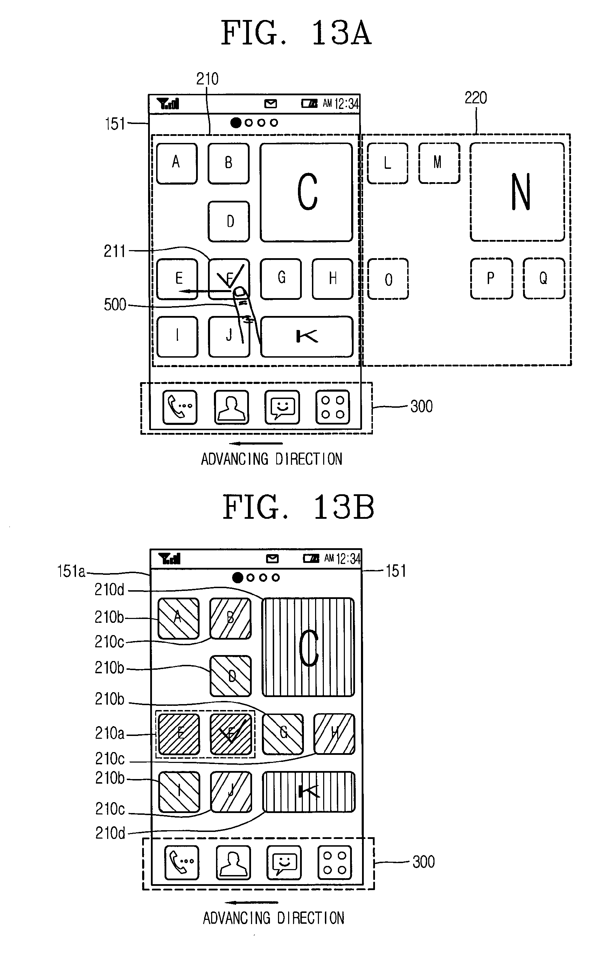

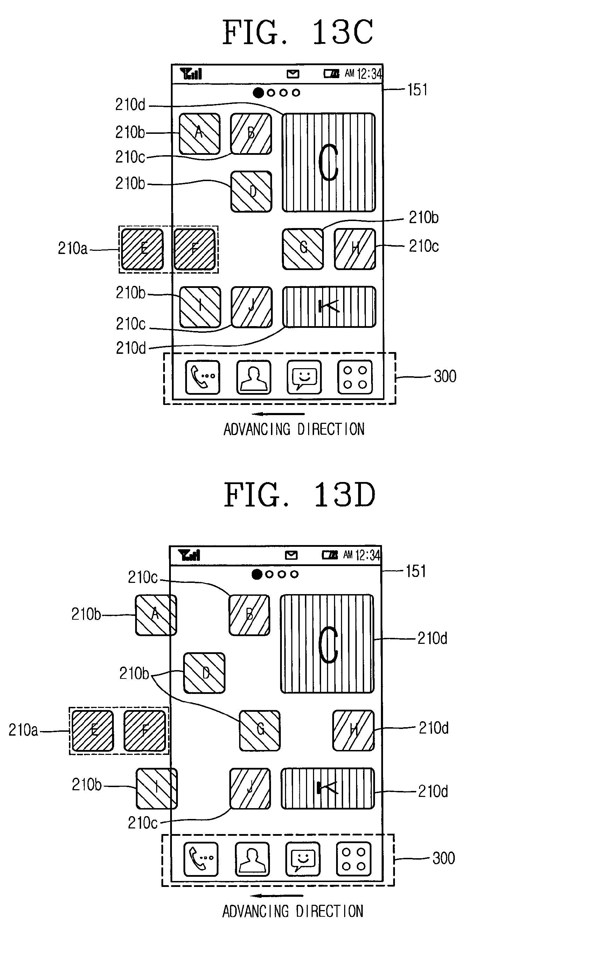

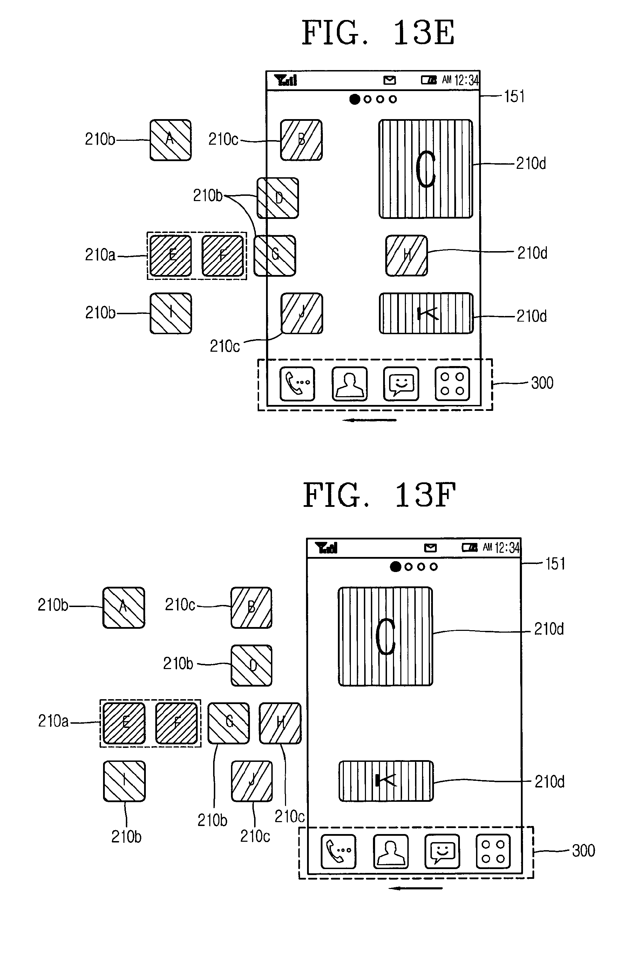

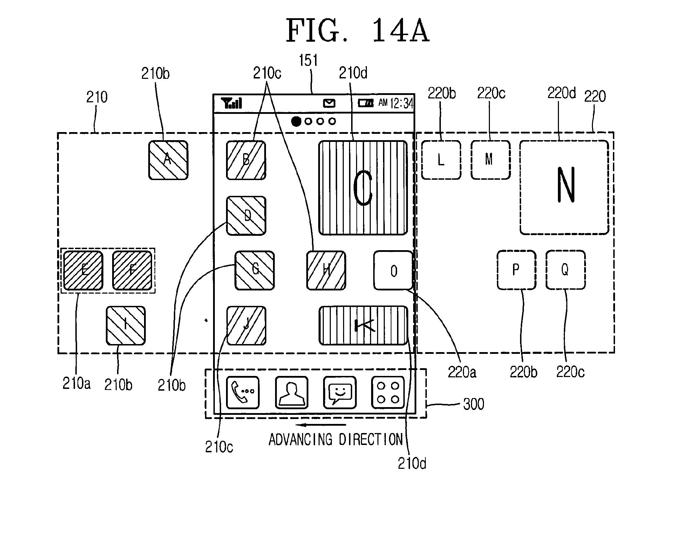

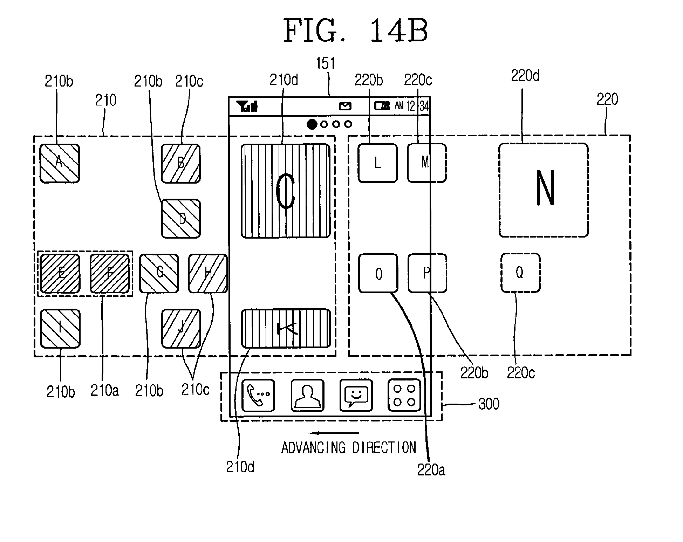

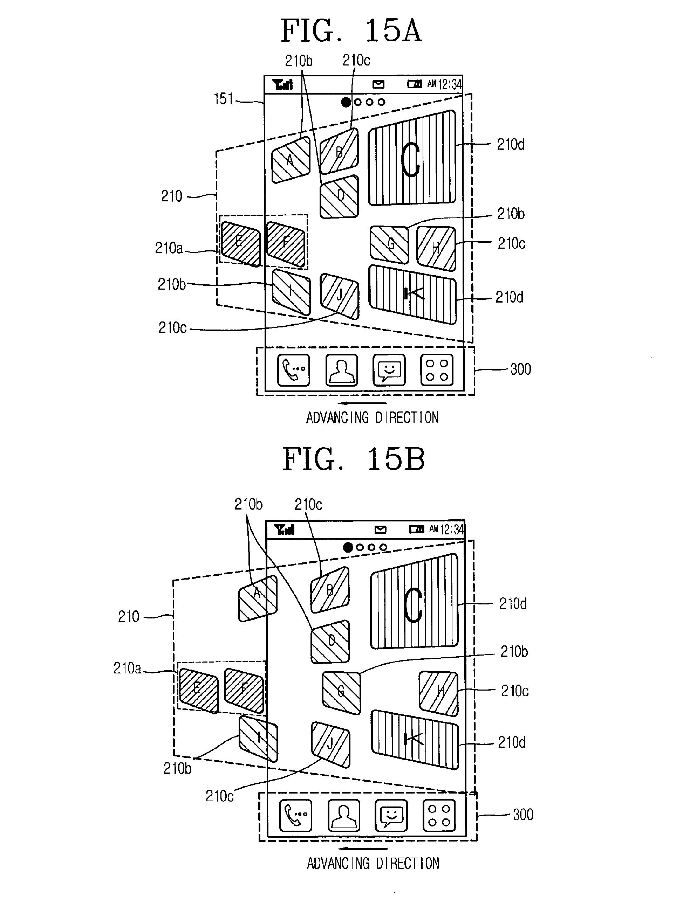

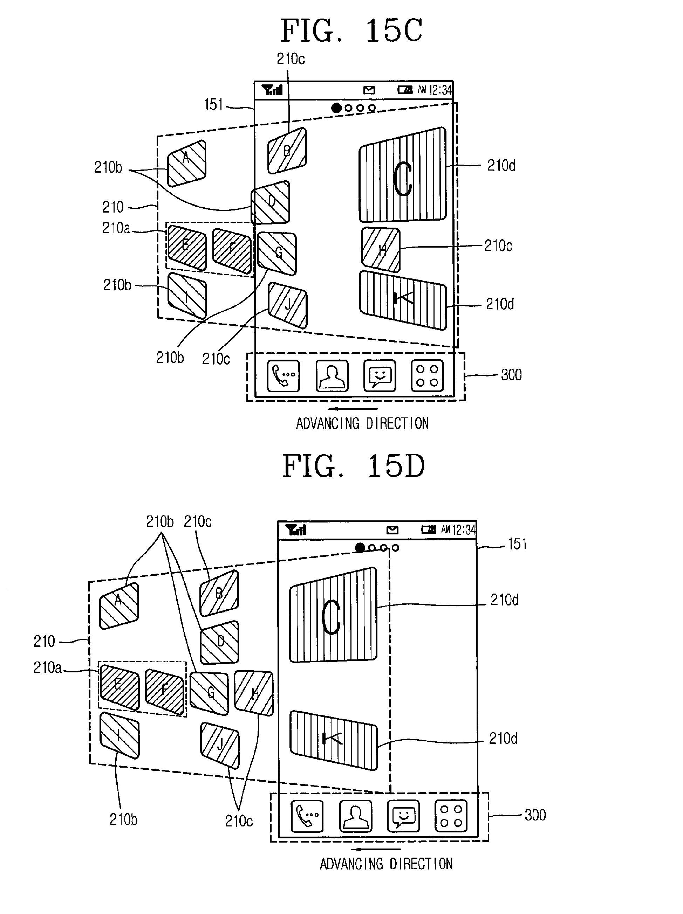

FIGS. 13A, 13B, 13C, 13D, 13E and 13F are conceptual views for explaining a method of moving objects contained in a first base region for each group in a mobile terminal according to an embodiment of the present disclosure. Furthermore, FIGS. 14A and 14B are conceptual views for explaining a method of moving a second base region being moved dependent on the movement of the first base region in a mobile terminal according to an embodiment of the present disclosure. In addition, FIGS. 15A, 15B, 15C and 15D are conceptual views for explaining a method of moving objects contained in a first base region with an inclination for each group in a mobile terminal according to an embodiment of the present disclosure.

As illustrated in FIG. 13A, when a touch gesture for moving the first base region 210 to the second base region 220 is sensed in a state that the first base region 210 is displayed on the display unit 151, the controller 180 may group objects contained in the first base region 210 into at least one group as illustrated in FIG. 13B.

Here, there may exist various criteria for grouping objects (A, B, C, D, E, F, G, H, I, K) contained in the first base region 210, and according to the present embodiment, a method of grouping them on the basis of an object 211 on which the touch gesture is sensed will be described.

First, the controller 180 sets an object "F" located at a position corresponding to the start position of the touch gesture and at least one object (object "E") located prior to the object "F" 211 on the basis of the movement direction of the terminal to a first group 210a.

The controller 180 may set an object located at a row corresponding to a row in which an object (object "F") on which the touch gesture is sensed together with the object on which the terminal is sensed to a first group 210a.

Furthermore, the controller 180 sets at least one object disposed most adjacent to a border 151a corresponding to an advancing direction of the touch gesture among borders of the display unit, excluding objects contained in the first group 210a among objects contained in the first base region 210, to a second group.

For example, in FIG. 13B, objects "A, D, G and I" may be set to a second group 210b. The controller 180 sets a third and a fourth group until all objects contained in the first base region 210 are grouped in the foregoing sequence.

According to the drawing, the third group 210c may be objects "B and H", and the fourth group 210d may be objects "C and K".

In such a manner, when the first through the fourth group 210a, 210b, 210c, 210d are set, the controller 180 sequentially moves the groups.

For example, as illustrated in FIG. 13C, the controller 180 moves the first group 210a containing an object "F" located at a position corresponding to the start position of the touch gesture among the first through the fourth group 210a, 210b, 210c, 210d prior to moving the second group 210b.

Then, when the first group 210a is moved to some extent, the controller 180 moves the second group 210b prior to moving the third group 210c as illustrated in FIG. 13D.

Then, when the second group 210b is moved to some extent, the controller 180 sequentially moves the third and the fourth group 210d, 210e, respectively, as illustrated in FIGS. 13E and 13F.

On the other hand, the lengths on which the first through the fourth group 210a, 210b, 210c, 210d are moved may be the same or different, and may be set in various ways according to circumstances.

Furthermore, the controller 180 may control the display unit 151 such that at least some of the first through the fourth group 210a, 210b, 210c, 210d are displayed in a transparent manner according to the extent that the first through the fourth group 210a, 210b, 210c, 210d are moved.

Furthermore, the controller 180 may move at least one group contained in the second base region 220 in interlock with the groups contained in the first base region 210 being moved as illustrated in FIGS. 14A and 14B.

A criterion for grouping objects containing the second base region 220 may be determined dependent on the sequence of moving objects contained in the first base region 210, and objects that can be preferentially moved according to an advancing direction of the touch gesture may be set to a first group. In other words, the controller 180 configures a group on the basis of objects in the sequence to be moved onto the display unit 151 among objects contained in the second base region 220.

For example, as illustrated in FIG. 14A, as the third group 210c contained in the first base region 210 is moved, an object "O" contained in the second base region 220 may be displayed on the display unit 151, and the object "O" may be set to the first group 220a.

In such a manner, as illustrated in FIG. 14B, the second group 220b may be objects "L and P", and the third group 220c may be objects "M and Q", and the fourth group 220d may be an object "N".

In this manner, the first through the fourth group 220a, 220b, 220c, 220d corresponding to the second base region 220 may be sequentially displayed on the display unit 151 in interlock with the sequence of objects contained in the first base region 210 being moved.

As described above, the controller may move objects contained in the first and the second base region at different times, and the user may feel a visual effect that the first and the second object are sporadically moved.

Furthermore, the controller may output a sound effect in a corresponding manner to the first and the second base region being sequentially moved.

Moreover, as illustrated in FIGS. 15A, 15B, 15C and 15D, when the first through the fourth group 210a, 210b, 210c, 210d contained in the first base region 210 are moved, the controller 180 may exhibit a visual effect in such a way that the first through the fourth group 210a, 210b, 210c, 210d seem to be moved with an inclination corresponding to a preset angle on the basis of a virtual reference axis located at a position corresponding to any one side 215a of the first base region 210.

Here, the movement sequence of the first through the fourth group 210a, 210b, 210c, 210d contained in the first base region is same as that of first through the fourth group 210a, 210b, 210c, 210d that have been described in FIGS. 13A, 13B, 13C, 13D, 13E and 13F, and thus the detailed description thereof will be omitted.

Furthermore, though not shown in the drawing, the inclination may be changed according to the extent that the first through the fourth group 210a, 210b, 210c, 210d are moved, and have a steeper inclination as reducing the extent that the first through the fourth group 210a, 210b, 210c, 210d are displayed on the display unit 151.

Furthermore, though not shown in the drawing, groups contained in the second base region 220 may be also displayed on the display unit 151 with a preset angle on the basis of a virtual reference axis for a side located at a position corresponding to any one side 215a of the first base region 210.

As described above, a mobile terminal according to an embodiment of the present invention the present disclosure may divide objects contained in a base region into a plurality of groups, and then move the plurality of groups at different times, and a criterion for setting the plurality of groups may be changed in various ways.

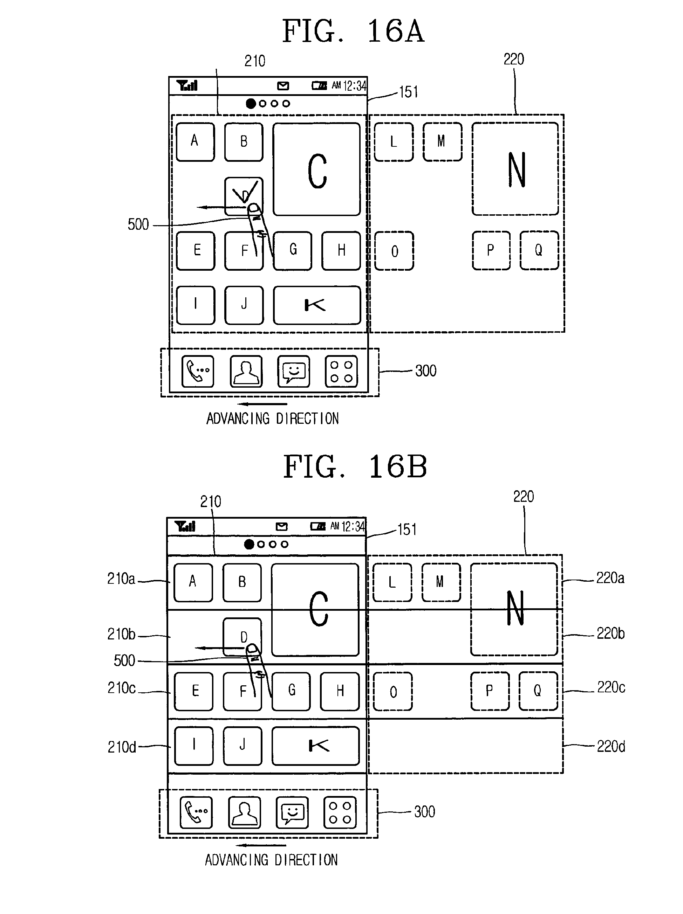

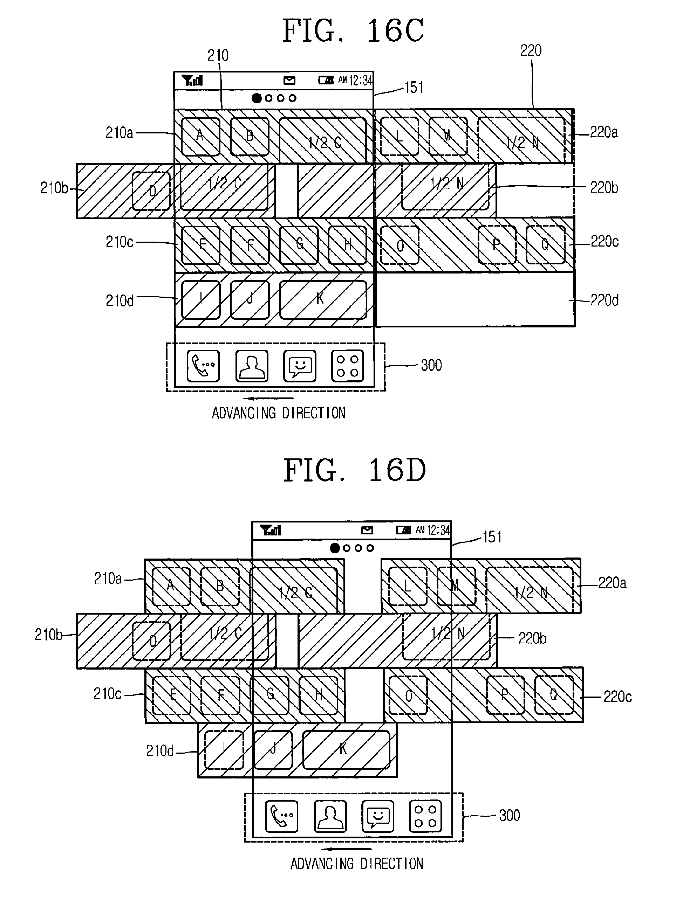

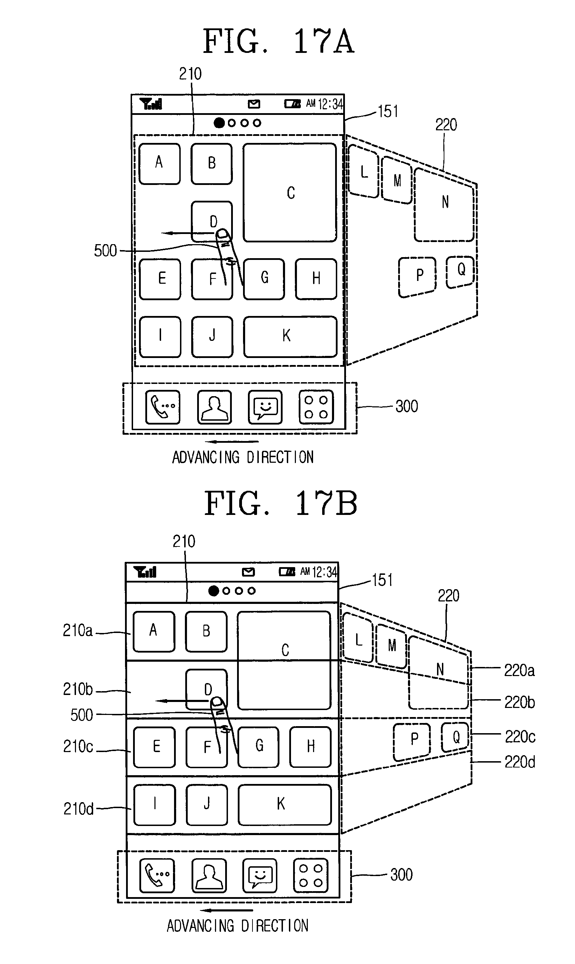

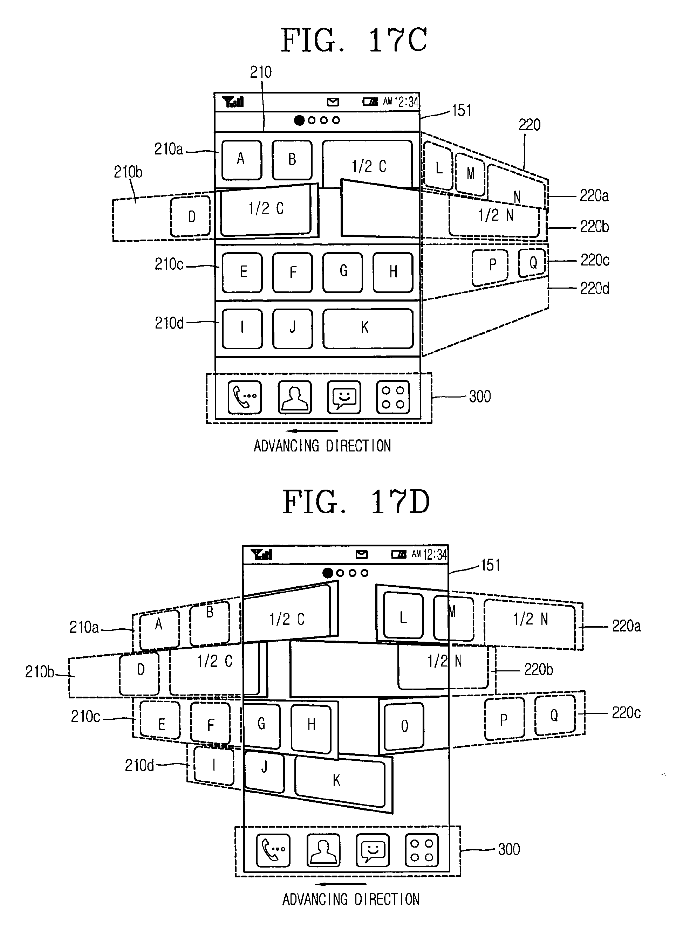

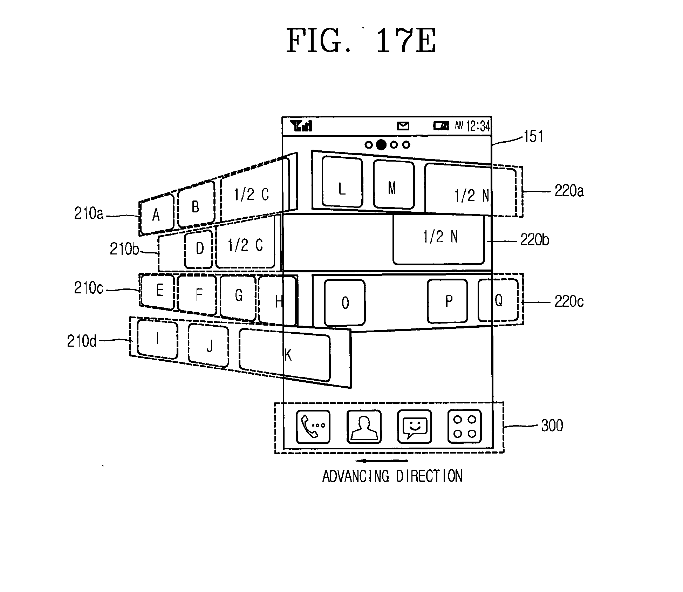

Hereinafter, another embodiment of dividing objects contained in a base region into a plurality of groups, and sequentially moving them will be described. FIGS. 16A, 16B, 16C, 16D and 16D are conceptual views for explaining a method of moving objects contained in a first base region based on a row in a mobile terminal according to an embodiment of the present disclosure, and FIGS. 17A, 17B, 17C, 17D and 17E are conceptual views for explaining a method of moving objects contained in a first base region with an inclination based on a row in a mobile terminal according to an embodiment of the present disclosure.

As illustrated in FIG. 16A, when a touch gesture 500 for moving the first base region 210 to the second base region 220 is sensed in a state that the first base region 210 is displayed on the display unit 151, the controller 180 may group the first base region 210 into a plurality of rows as illustrated in FIG. 16B.

Here, the rows are divided on the basis of a unit cell illustrated in FIGS. 11A and 11B, and according to an embodiment of the present disclosure, the first base region 210 may be divided into four rows as illustrated in FIG. 16B, and accordingly, the first base region 210 may be divided into four groups 210a, 210b, 210c, 210d.

In this manner, when the first base region 210 is divided into four groups, the controller 180 moves the second group 210b (refer to FIG. 16B) from which the touch gesture 500 is started to the first priority.

Then, the controller 180 moves at least one group adjacent to the first group to the second priority. For example, the controller 180 moves the first and the third group 210a, 210c adjacent to the second group 210b subsequent to the second group 210b as illustrated in FIG. 16D.

Here, a time interval for moving the first and the third group 210a, 210c subsequent to moving the second group 210b may be set in a different manner based on at least one of the length and speed of the touch gesture, and may be determined at its discretion by the controller 180.

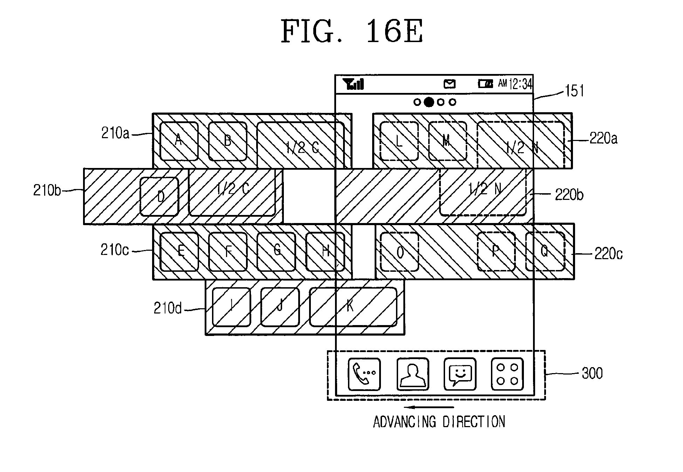

Furthermore, as illustrated in FIG. 16E, subsequent to moving the first and the third group 210a, 210c, the fourth group 210d not adjacent to the second group 210b may be finally moved.

On the other hand, as illustrated in FIG. 16C, the second base region 220 may be divided into a plurality of groups 220a, 220b, 220c being divided into a plurality of rows similarly to the first base region 210, and the plurality of groups 220a, 220b, 220c contained in the second base region may be sequentially displayed on the display unit 151 dependent on the movement of groups contained in the first base region.

As illustrated in the drawing, when the second group 210b contained in the first base region is moved, at least part of the second group 220b located at a position corresponding to the second group 210b among a plurality of groups 220a, 220b, 220c contained in the second base region may be displayed on the display unit 151.

In such a manner, a plurality of groups 220a, 220b, 220c contained in the second base region may be displayed on the display unit dependent on the extent that the first base region 210 is moved (refer to FIGS. 16C, 16D and 16E).

On the other hand, as illustrated in FIG. 1B, as the first and the second base region are divided into a plurality of rows on the basis of a unit cell, objects (for example, objects "C and D") having a size greater than that of the unit cell may be divided to be contained in different groups from one another.

In this case, the objects may be divided and moved on the basis of each group as illustrated in FIGS. 16C, 16D and 16E.

Moreover, as illustrated in FIGS. 17A, 17B, 17C, 17D and17E, the first through the fourth group 210a, 210b, 210c, 210d contained in the first base region 210 and the first through the fourth group 220a, 220b, 220c, 220d of the second base region 220 corresponding to them may be moved with an inclination corresponding to a preset angle.

Here, the movement sequence of the first through the fourth group 210a, 210b, 210c, 210d contained in the first base region 210 and the first through the fourth group 220a, 220b, 220c, 220d contained in the second base region 220 is the same as that illustrated in FIGS. 16A, 16B, 16C, 16D and 16E, and thus the detailed description thereof will be omitted.

Furthermore, though not shown in the drawing, the inclination may be changed according to the extent that the groups are moved. For example, an inclination of the first through the fourth group 210a, 210b, 210c, 210d contained in the first base region may be shown steeper as reducing the extent that the first through the fourth group 210a, 210b, 210c, 210d are displayed on the display unit 151. Furthermore, in the corresponding manner, an inclination of the first through the fourth group 220a, 220b, 220c, 220d contained in the second base region may be reduced as increasing the extent that the first through the fourth group 220a, 220b, 220c, 220d contained in the second base region are displayed on the display unit 151.

As described above, according to the present disclosure, objects contained in a base region may be sequentially moved for each group, thereby providing visual amusement to the user.

Furthermore, a mobile terminal and a control method thereof according to an embodiment of the present disclosure may move a page and an object contained in the page while transforming their shapes in response to a touch gesture applied on the display unit. In other words, a mobile terminal and a control method thereof according to an embodiment of the present disclosure may transform the shape of a page and an object contained in the page when any one of a plurality of pages is switched to another page based on a touch gesture, thereby providing visual amusement to the user.

Furthermore, according to an embodiment of the present disclosure, the foregoing method may be implemented as codes readable by a processor on a medium written by the program. Examples of the processor-readable media may include ROM, RAM, CD-ROM, magnetic tape, floppy disk, and optical data storage device, and the like, and also include a device implemented via a carrier wave (for example, transmission via the Internet).

The configurations and methods according to the above-described embodiments will not be applicable in a limited way to the foregoing terminal, and all or part of each embodiment may be selectively combined and configured to make various modifications thereto.

## Claims

1. A mobile terminal, comprising:
a display unit(151) configured to output a first base region containing at least one object;
a sensing unit(140) configured to sense a touch gesture for displaying a second base region different from the first base region on the display unit; and
a controller(180) configured to control the display unit to display the second base region on the display unit in response to the touch gesture, and transform at least one shape of an object contained in the first base region and the first base region when the first base region is switched to the second base region.

2. The mobile terminal of claim 1, wherein the first base region is moved in a direction corresponding to the touch gesture based on the touch gesture, and
the controller(180) controls the display unit(151) to display at least part of the first base region in a transparent manner when the first base region is moved as much as a distance corresponding to a reference length.

3. The mobile terminal of one of any claims 1 and 2, wherein the first base region is moved while being transformed into a state that the length of a first edge adjacent to the second base region among edges of the first base region is larger than that of a second edge facing the first edge, and
the second base region is displayed on the display unit(151) in a state that the length of a third edge adjacent to the first edge among edges of the second base region is transformed into a length greater than that of a fourth edge facing the third edge in interlock with the movement of the first base region.

4. The mobile terminal of claim 3, wherein the size of the first and the second base region is subject to a range displayed on the display unit(151), and
the size of the region is increased as increasing the range displayed on the display unit(151).

5. The mobile terminal of one of any claims 1, 2 and 3, wherein the first base region is moved while the size of the first base region is gradually decreased around a first reference axis on the first base region, and
the length of edges of the first base region in parallel to the first reference axis is gradually decreased according to the movement of the first base region.

6. The mobile terminal one of any claims 1, 2, 3 and 5, wherein the first and the second base region are inclined while making a preset angle on the basis of edges adjacent between the first and the second base region based on the touch gesture.

7. The mobile terminal of one of any claims 1, 2, 3, 5 and 6, wherein the controller(180) rotationally moves the first base region using a first edge of the first base region as a reference axis, and
a difference between the length of the first edge and the length of the second edge facing the first edge among edges of the first base region is increased according to the extent that the first base region is rotated.

8. The mobile terminal of one of any claims 1, 2 3, 5, 6 and 7, wherein the first base region is gradually disappeared while being moved in a direction corresponding to the touch gesture in the state of being enlarged to a preset size, and
the second base region is displayed on the display unit(151) while being gradually enlarged from the state of being reduced to a preset size in interlock with the movement of the first base region.

9. The mobile terminal of one of any claims 1, 2 3, 5, 6, 7 and 8, wherein the first base region is overlapped with a background screen previously displayed on the display unit(151), and the first base region has a transparency such that the background screen can be identified, and
objects contained in the first base region are non-transparent.

10. A mobile terminal, comprising:
a display unit(151) configured to output a first base region containing a plurality of groups;
a sensing unit(140) configured to sense a touch gesture for displaying a second base region different from the first base region on the display unit; and
a controller(180) configured to control the display unit(151) to display the second base region on the display unit in response to the touch gesture, and sequentially move a plurality of groups contained in the first base region when the first base region is switched to the second base region.

11. The mobile terminal of claim 10, wherein the movement sequence of a plurality of groups contained in the first base region is determined on the basis of a position to which the touch gesture is applied.

12. The mobile terminal of one of any claims 10 and 11, wherein the second base region contains a plurality of group, and
a plurality of groups contained in the second base region are sequentially displayed on the display unit(151) dependent on the movement of groups contained in the first base region.

13. The mobile terminal of one of any claims 10 to 12, wherein a plurality of groups contained in the first base region are a plurality of rows for dividing the first base region into a preset number of intervals.

14. The mobile terminal of one of any claims 10 to 13, wherein the plurality of groups are moved with an inclination corresponding to a preset angle on the basis of a virtual reference axis located at a position corresponding to any one side of the base region.

15. The mobile terminal of one of any claims 10 to 14, wherein the controller(180) sets a first object located at the start position of the touch gesture among a plurality of objects contained in the first base region and at least one object located prior to the first object on the basis of the movement direction of the touch gesture to a first group.
